# EUROPEAN PATENT APPLICATION

(11) **EP 4 804 640 A1**
(43) Date of publication of application: **09.09.2026**
(21) Application number: 24883936.7
(22) Date of filing: 14.06.2024
(51) Int. Cl.: H04W 52/02

(54) **SIGNAL TRANSMISSION METHODS, DEVICES AND STORAGE MEDIUM**

(30) Priority: 02.11.2023 CN 202311450001
(71) Applicant: ZTE CORPORATION, Shenzhen, Guangdong 518057 (CN)
(72) Inventor: GUO, Qiujin, Shenzhen, Guangdong 518057 (CN); DAI, Bo, Shenzhen, Guangdong 518057 (CN); CHEN, Mengzhu, Shenzhen, Guangdong 518057 (CN); XU, Jun, Shenzhen, Guangdong 518057 (CN); LIU, Kun, Shenzhen, Guangdong 518057 (CN); YANG, Weiwei, Shenzhen, Guangdong 518057 (CN); HU, Youjun, Shenzhen, Guangdong 518057 (CN); MA, Xuan, Shenzhen, Guangdong 518057 (CN); MA, Xiaoying, Shenzhen, Guangdong 518057 (CN)
(74) Representative: Vossius & Partner Patentanwälte Rechtsanwälte mbB
(86) International application number: PCT/CN2024/099254
(87) International publication number: WO 2025/091925

(57) **Abstract**

The present application provides signal transmission methods, devices, and a storage medium. A signal transmission method applied to a first communication device includes: receiving a low power signal transmitted by a second communication device, where the low power signal is obtained by: the second communication device generating a corresponding sequence based on bit information and performing resource mapping on the sequence.

## Description

### CROSS-REFERENCE TO RELATED APPLICATION(S)

The present application claims priority to Chinese Patent Application No. 202311450001.1, filed on November 2, 2023 and entitled "SIGNAL TRANSMISSION METHODS, DEVICES, AND STORAGE MEDIUM", which is incorporated herein by reference in its entirety.

### FIELD

The present application relates to the field of communication technology, and specifically, to signal transmission methods, devices, and a storage medium.

### BACKGROUND

A low power (LP) signal may trigger user equipment (UE) to stop performing a UE uplink and downlink transmission behavior, or may wake up the UE to start performing the UE uplink and downlink transmission behavior (also referred to as turning on a host). Terminal behaviors include physical downlink control channel (PDCCH) monitoring, physical downlink shared channel (PDSCH) receiving, physical uplink control channel (PUCCH) /physical uplink shared channel (PUSCH) transmitting, etc., and the power consumption of the UE in an active state is higher than that in a terminal sleep state. In addition, compared to a main radio (MR) receiver of a new radio (NR), a low-power receiver composed of low-power components is capable of detecting an LP signal in a low-power state. Therefore, the LP signal can provide a terminal with long sleep periods and low-power LP signal detection. By considering backward compatibility to ensure that the UE can receive the LP signal through the LP receiver and/or the NR main radio receiver, how to provide a solution for jointly generating the LP signal by an on-off keying (OOK) symbol and an orthogonal frequency division multiplexing (OFDM) sequence is an urgent problem to be solved.

### SUMMARY

An embodiment of the present application provides a signal transmission method, applied to a first communication device, including: receiving a low power signal transmitted by a second communication device, where the low power signal is obtained by: a second communication device generating a corresponding sequence based on bit information and performing resource mapping on the sequence.

An embodiment of the present application provides a signal transmission method, applied to a second communication device, including: generating a corresponding sequence based on bit information; performing resource mapping on the sequence to generate a corresponding low power signal; and transmitting the low power signal to a first communication device.

An embodiment of the present application provides a first communication device, including a communication module, configured to receive a low power signal transmitted by a second communication device. The low power signal is obtained by: the second communication device generating a corresponding sequence based on bit information and performing resource mapping on the sequence.

An embodiment of the present application provides a second communication device, including a first generation module, configured to generate a corresponding sequence based on bit information; a second generation module, configured to perform resource mapping on the sequence and generate a corresponding low power signal; and a communication module, configured to transmit the low power signal to a first communication device.

An embodiment of the present application provides a communication device, including a memory and one or more processors. The memory is configured to store one or more programs. The one or more programs, when executed by the one or more processors, cause the one or more processors to implement the method according to any of the above-mentioned embodiments.

An embodiment of the present application provides a storage medium, having a computer program stored therein. The computer program, when executed by a processor, causes the method according to any of the above-mentioned embodiments to be implemented.

### BRIEF DESCRIPTION OF THE DRAWINGS

FIG. 1 is a flowchart of monitoring a low power signal by UE according to an embodiment of the present application;
FIG. 2a is a schematic diagram of the implementation of a signal generation manner for OOK-1 according to an embodiment of the present application;
FIG. 2b is a schematic diagram of the implementation of a signal generation manner for OOK-4 according to an embodiment of the present application;
FIG. 3a is a schematic diagram of generation of a low power signal according to an embodiment of the present application;
FIG. 3b is a schematic diagram of generation of another low power signal according to an embodiment of the present application;
FIG. 3c is a schematic diagram of generation of a low power signal according to an embodiment of the present application;
FIG. 4 is a flowchart of a signal transmission method according to an embodiment of the present application;
FIG. 5 is a flowchart of another signal transmission method according to an embodiment of the present application;
FIG. 6 is a schematic diagram of generation of a low power signal where different sequences are carried at first positions of different codewords according to an embodiment of the present application;
FIG. 7 is a schematic diagram of a time-domain signal where different sequences are carried at first positions of different codewords according to an embodiment of the present application;
FIG. 8 is a schematic diagram of generating a low power signal where an information bit and a CRC bit carry different sequences according to an embodiment of the present application;
FIG. 9 is a schematic diagram of a time-domain signal where an information bit and a CRC bit carry different sequences according to an embodiment of the present application;
FIG. 10a is a schematic diagram of carrying a sequence at a first position to which a codeword corresponds, according to an embodiment of the present application;
FIG. 10b is a schematic diagram of carrying a sequence at a first position to which a codeword corresponds, according to an embodiment of the present application;
FIG. 11a is a schematic diagram of repeated transmission of a second sequence across a plurality of first positions according to an embodiment of the present application;
FIG. 11b is a schematic diagram of transmission of a second sequence at first positions of different frequency-domain positions according to an embodiment of the present application;
FIG. 12 is a schematic diagram of transmission of a second sequence on available mapping resources spaced at intervals of one first position according to an embodiment of the present application;
FIG. 13 is a schematic diagram of the configuration of different beam directions for the same sequence according to an embodiment of the present application;
FIG. 14 is a schematic diagram of transmission of a sequence on a slot before an OOK symbol according to an embodiment of the present application;
FIG. 15 is a schematic diagram of transmission of a sequence before an OOK symbol and at a first position of the OOK symbol according to an embodiment of the present application;
FIG. 16 is a schematic diagram of the implementation of carrying a sequence indicating its related subgroup information on a first position according to an embodiment of the present application;
FIG. 17a is a schematic diagram of the implementation of determining a sequence used for transmission according to an embodiment of the present application;
FIG. 17b is a schematic diagram of the implementation of determining a sequence used for transmission according to an embodiment of the present application;
FIG. 18 is a schematic diagram of the implementation of selecting a sequence used for transmission from a sequence pool according to an embodiment of the present application;
FIG. 19 is a schematic diagram of the implementation of sequence segment mapping onto two first positions of an OOK-4 symbol according to an embodiment of the present application;
FIG. 20 is a schematic diagram of the implementation of sequence segmented mapping according to an embodiment of the present application;
FIG. 21 is a schematic diagram of the implementation of another sequence segmented mapping according to an embodiment of the present application;
FIG. 22 is a schematic diagram of the implementation of sequence interleaved mapping according to an embodiment of the present application;
FIG. 23 is a schematic diagram of the implementation of sequence interval mapping according to an embodiment of the present application;
FIG. 24 is a schematic diagram of the implementation of low-power signal indication application latency according to an embodiment of the present application;
FIG. 25 is a structural block diagram of a first communication device according to an embodiment of the present application;
FIG. 26 is a structural block diagram of a second communication device according to an embodiment of the present application; and
FIG. 27 is a schematic structural diagram of a communication device according to an embodiment of the present application.

### DETAILED DESCRIPTION OF EMBODIMENTS

Embodiments of the present application are described in detail below in conjunction with the accompanying drawings. The present application is described below with reference to the accompanying drawings of the embodiments, and the examples provided are merely for explaining the present application and are not intended to limit the scope of the present application.

The technical solution of the present application may be applied to 5G NR, 5G-A, and 6G standards, base stations, terminals, chips, and applications. The technical solution of the present application may also be applied to licensed and unlicensed spectrums, suitable for duplex and/or half-duplex, time division duplex (TDD) and/or frequency division duplex (FDD), as well as uplink and/or downlink data transmission. The technical solution of the present application may also be used for, but is not limited to, energy-saving terminal devices, RedCap devices, IoT devices, NB-IoT devices, Ambient-IoT devices, and base stations or serving cells that support energy saving.

The description of "or" as used in the specification and claims of the present application may be used for a list of items (e.g., a list of items employing a phrase such as "at least one" or "one or more") to indicate an inclusive list. For example, a list having at least one of A, B, or C, indicates A or B or C or AB or AC or BC or ABC (i.e., A and B and C).In addition, the phrase "based on" should not be interpreted as referring to a bounded closed set of conditions. For example, one exemplary operation described as "based on a condition A" may be based on the condition A and a condition B without departing from the scope of the present application. In other words, as used in the present application, the phrase "based on" should be interpreted in the same method as the phrase "at least partially based on" or "at least based on a portion of".

In the specification and claims of the present application, A "associated with B" or "related to B" means that A includes B or B includes A or A includes at least one of B or B includes at least one of A.

For a 5G system, besides latency, reliability, and availability, the energy efficiency of UE is also critical. Currently, a 5G device may require weekly or daily charging according to individual usage durations. Typically, the 5G device consumes tens of milliwatts of power in a radio resource control (RRC) idle/inactive state and consumes hundreds of milliwatts of power in an RRC connected state. Designing extended battery life is a necessary condition to improve energy efficiency and user experience. Power consumption depends on a configured wake up cycle length, such as a paging cycle. In order to satisfy battery life requirements, a high-value extended discontinuous reception (eDRX) cycle may be adopted, leading to high latency, which is unsuitable for services requiring both battery life and low latency. Therefore, an ultra low power wake up (LP-WUS) mechanism is proposed.

After the user equipment enters an ultra low power state, in terms of channel time-frequency synchronization, the prior art allows for the acquisition of channel time-frequency synchronization information based on a ZC sequence, an m sequence, and a PN sequence. For example, a primary synchronization signal (PSS) and a secondary synchronization signal (SSS) are commonly used for time-frequency synchronization detection. Therefore, time-frequency offset resistance performance of a low power signal needs to be increased as much as possible.

In order to carry more indication information and anti-noise characteristics, information bits may be modulated. Generally, modulation schemes for modulating raw information bits and bit information include amplitude-shift keying (ASK), OOK, frequency-shift keying (FSK), binary phase shift keying (BPSK), π/2-BPSK, and quadrature phase shift keying (QPSK). Further, through a sequence-based modulation scheme, the indication information may be carried through a sequence. For example, a sequence is for carrying cell identity (ID) and UE ID information, or a sequence in a candidate sequence set is for indicating different trigger states.

Embodiments of the present application provide a signal transmitting and receiving method, a terminal, devices, and a storage medium. The signal is a low power signal. The receiving method includes: receiving, by user equipment, configuration information related to the low power signal transmitted by a wireless network node, and determining a monitoring occasion of the low power signal based on the configuration information. The transmitting method includes: selecting an appropriate resource mapping method according to a resource allocation condition of raw information bits and the low power signal, and finally generating a time-domain continuous signal. The solution of the present application may enable the terminal to detect and receive the low power signal through both a low-power receiver and a main radio receiver, while the low power signal generated through design exhibits a strong capability of resistance to time-domain and frequency-domain offsets.

When the LP-WUS adopts OOK modulation, the LP-WUS may be referred to as OOK based LP-WUS. Further, when the number of subcarriers occupied by an OOK signal in a frequency domain is greater than one, the OOK signal is also referred to as MC-OOK, and in this case, a waveform of the LP-WUS is also referred to as MC-OOK based LP-WUS. The MC-OOK based LP-WUS may be generated through the following method.

A method for generating the MC-OOK based LP-WUS includes:
Operation 1: One OFDM symbol includes M MC-OOK based LP-WUS symbols, where M is greater than or equal to 1.

Assume that data information transmitted on the M OOK symbols isS_{M} , and is defined as S_{M} = [s₀, s₁, s₂, s₃... , s_{M-1}], with a length of M.

Operation 2: Convert S_{M} into data information Q_{K} according to the following formula, where a length of Q_{K} is K, and K is greater than or equal to M. For example, Q_{K} = $\left[{{{s}_{0} , {s}_{0} , ⋯ , {s}_{0}}_{︸}}_{A},{{{s}_{1} , {s}_{1} , ⋯ , {s}_{1}}_{︸}}_{A},…,{{{s}_{M - 1} , {s}_{M - 1} , ⋯ , {s}_{M - 1}}_{︸}}_{A}\right]$.

Alternatively, $\begin{matrix}{Q}_{K} = \\ \left[{{{w}_{0}^{0} ⋅ {s}_{0} , {w}_{0}^{1} ⋅ {s}_{0} , ⋯ , {w}_{0}^{{A}_{0} - 1} ⋅ {s}_{0}}_{︸}}_{{A}_{0}},{{{w}_{1}^{0} ⋅ {s}_{1} , {w}_{1}^{1} ⋅ {s}_{1} , ⋯ , {w}_{1}^{{A}_{1} - 1} ⋅ {s}_{1}}_{︸}}_{{A}_{1}},…,{{{w}_{M - 1}^{0} ⋅ {s}_{M - 1} , {w}_{M - 1}^{1} ⋅ {s}_{M - 1} , ⋯ , {w}_{M - 1}^{{A}_{M - 1}} {s}_{M - 1}}_{︸}}_{{A}_{M - 1}}\right.\end{matrix}$

A₀ + A₁ + ... Aᵢ +...+A_{M-1} = K.

Data $\left[{w}_{i}^{0}, {w}_{i}^{1}, ⋯, {w}_{i}^{{A}_{i} - 1}\right]$ may be configured, where 0 ≤ i ≤ M - 1.

Operation 3: Process the data information Q_{K} as follows: 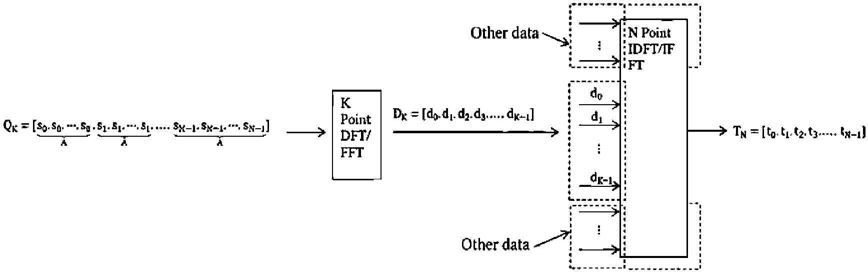
(1) performing a K point DFT/FFT operation on the data information Q_{K} to obtain data information D_{K} = [d₀, d₁, d₂, d₃, ... , d_{K-1}];
(2) filling the data information D_{K} onto K subcarriers corresponding to the LP-WUS in the frequency domain; and
(3) when a frequency-domain bandwidth of the system includes N subcarriers, performing an N point IDFT/IFFT operation on padding data on the N subcarriers to obtain time-domain data T_{N} = [t₀, t₁, t₂, t₃,..., t_{N-1}] of N sampling points.

T_{N} = [t₀, t₁, t₂, t₃,..., t_{N-1}] represents sampling point data of the M OOK time-domain symbols. [t₀, t₁, t₂, t₃,..., t_{N/M-1}] represents sampling point data of a first OOK time-domain symbol among the M OOK time-domain symbols, [t_{N/M}, t_{N/M+1},..., t_{2N/M-1}] represents sampling point data of a second OOK time-domain symbol among the M OOK time-domain symbols, and so on, and [t_{(M-1)N/M}, t_{(M-1)N/M+1},..., t_{N-1}] represents sampling point data of an M-th OOK time-domain symbol among the M OOK time-domain symbols.

Finally, before transmitting the time-domain data T_{N} = [t₀, t₁, t₂, t₃, t_{N-1}] of the N sampling points, a cyclic prefix (CP) addition operation needs to be performed. That is, N_{cp}, sampling point information from the end of the time-domain data T_{N} of the N sampling points is copied to the head of the time-domain data T_{N} of the N sampling points, forming time-domain data of (N+Ncp) sampling points, which is then transmitted.

In practical operations, the frequency-domain offset has a significant impact on the detection of the LP-WUS. In order to reduce the impact of the frequency-domain offset on detection performance, a new LP-WUS transmitting method is designed. Because the OOK-based LP-WUS has low spectrum efficiency, a new LP-WUS generation and transmission method can also achieve a purpose of improving a resource utilization rate and transmission efficiency.

A base station transmits high layer configuration information to the UE, and the UE determines the monitoring occasion of the low power signal according to the high layer configuration information, and/or monitors the low power signal. The high layer configuration information related to the low power signal includes at least one of the following:
a time/frequency control resource set (CORESET) includes a starting subcarrier position interval of a first sequence and a second sequence; or
a search space set (SSS) includes a monitoring occasion sliding time window T, with units of 1/2n symbols or sampling points, for acquiring T time-domain correlation values; and a cross-symbol sequence detection identifier, configured for indicating whether the UE may combine and perform correlated detection or monitoring on time-domain sequences from one or more symbols.

A modulation and code scheme (MCS) includes a first modulation and code scheme and/or a second modulation and code scheme. The first modulation and code scheme includes a code scheme using at least one of a polar code, a Reed-Muller (RM) code, or a Manchester code, and a modulation scheme using at least one of ASK, OOK, or FSK. The second modulation and code scheme includes a code scheme using at least one of the polar code, the RM code, a low-density parity-check (LDPC) code, or a convolutional code, and a modulation scheme using at least one of an SSS sequence, a PSS sequence, an m sequence, a PN sequence, a ZC sequence, pi/2-BPSK, BPSK, QPSK, 16QAM, or DFT-s-OFDM.

A candidate sequence set or sequence pool size is for indicating the number of available sequences, facilitating sequence detection at a receiving terminal.

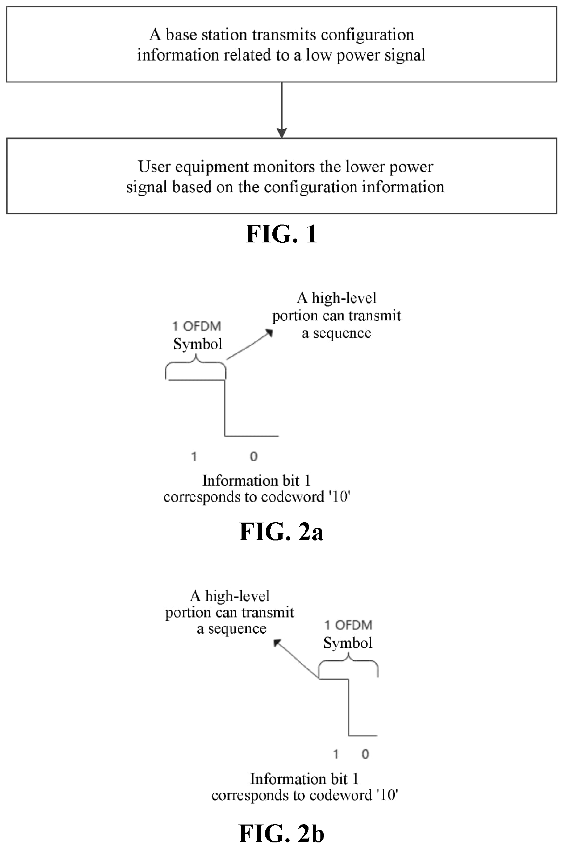

In an example, FIG. 1 is a flowchart of monitoring a low power signal by UE according to an embodiment of the present application. As shown in FIG. 1, the process of monitoring the low power signal by the UE includes the following operations: a base station transmitting configuration information related to the low power signal; and the user equipment monitoring the low power signal based on the configuration information.

In an embodiment, the base station configures the configuration information such as CORESET, SSS, and the modulation and code scheme, and transmits the configuration information to the UE, and the UE determines to monitor the LP-WUS on a configured resource based on the configuration information.

The OOK-based LP-WUS may carry 1-bit information (denoted as OOK-1) and multi-bit information (denoted as OOK-4) on a single OFDM symbol. In some embodiments, a high-level portion of the OOK symbol is denoted as a first position or a first position portion of the OOK symbol, and a low-level portion of the OOK symbol is denoted as a second position or a second position portion of the OOK symbol. In some embodiments, the first position represents a high-level position, and the second position represents a low-level position. In some embodiments, the first position represents that there is a transmission position, and the second position represents that there is no transmission position. In some embodiments, the first position represents that there is a sequence transmission position, and the second position represents that there is no sequence transmission position. Wherein there being no sequence transmission position means that a sequence of all zeros, or a sequence with a real portion or amplitude value not greater than zero, is transmitted at the position, or that the position does not carry the second sequence, or that sequence scrambling is not employed.

FIG. 2a is a schematic diagram of the implementation of a signal generation method for OOK-1 according to an embodiment of the present application. As shown in FIG. 2a, 1-bit information is Manchester-encoded at a code rate of 1/R to generate a codeword with a length of R bits (e.g., R=2, and a codeword corresponding to bit 1 is '10', and a codeword corresponding to bit 0 is '01'). Each bit in the codeword occupies one OFDM symbol. In the codeword, a bit with a value of 1 corresponds to a first position (occupying one OFDM symbol) of an OOK-1 time-domain signal, and a bit with a value of 0 corresponds to a second position portion (occupying another adjacent OFDM symbol) of the OOK-1 time-domain signal. The first position portion may be mapped to a sequence, and the sequence includes at least one of an m sequence, a ZC sequence, a pseudo-noise (PN) sequence, a low peak to average power ratio (PAPR) sequence, a primary synchronization signal (PSS), a secondary synchronization signal (SSS), a tracking reference signal (TRS), a phase sequence, a QPSK modulation symbol, or the like.

FIG. 2b is a schematic diagram of the implementation of a signal generation method for OOK-4 according to an embodiment of the present application. As shown in FIG. 2b, 1-bit information is Manchester-encoded at a code rate of 1/R to generate a codeword with a length of R bits (e.g., R=2). M codewords occupy one OFDM symbol (e.g., M=2). For codewords mapped onto the same OFDM symbol, a bit with a value of 1 in the codeword corresponds to a first position of an OOK-4 time-domain signal, and a bit with a value of 0 in the codeword corresponds to a second position portion of the OOK-4 time-domain signal. The first position portion may be mapped to a sequence, and the sequence includes at least one of an m sequence, a ZC sequence, a PN sequence, a low PAPR sequence, a primary synchronization signal (PSS), a secondary synchronization signal (SSS), a tracking reference signal (TRS), a phase sequence, or the like.

The low power signal generation process includes at least one of the following operations: bit information, sequence generation, encoding, modulation, time-frequency domain resource mapping, inverse fast Fourier transform (IFFT), and time-domain signal generation.

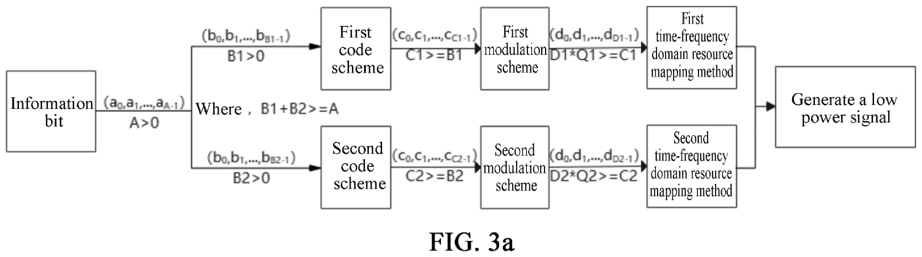

FIG. 3a is a schematic diagram of generation of a low power signal according to an embodiment of the present application. As shown in FIG. 3a, bit information includes first bit information and second bit information. The first bit information is operated according to at least one of a first code scheme (Manchester encoding) or a first modulation scheme (OOK) to generate an OOK symbol. The second bit information is operated according to at least one of a second code scheme (polar code, RM code, TBCC code, LDPC code, and the like) or a second modulation scheme (sequence-based modulation scheme) to generate a second sequence. The OOK symbol is mapped onto a corresponding time-frequency domain/resource element (RE) resource through a first time-frequency resource mapping method. The second sequence is carried on a mapping resource of a first position of the OOK symbol through a second time-frequency resource mapping method. Finally, the low power signal is generated by IFFT. D2 is not greater than D1/ (C1/B1). Q1 and Q2 are modulation symbol lengths after 1-bit modulation. For the first modulation scheme, Q1 is equal to a length of the first position of the OOK symbol. For the second modulation scheme, Q2 is equal to a length of the second sequence. The first bit information and the second bit information may be the same information or different information or related information.

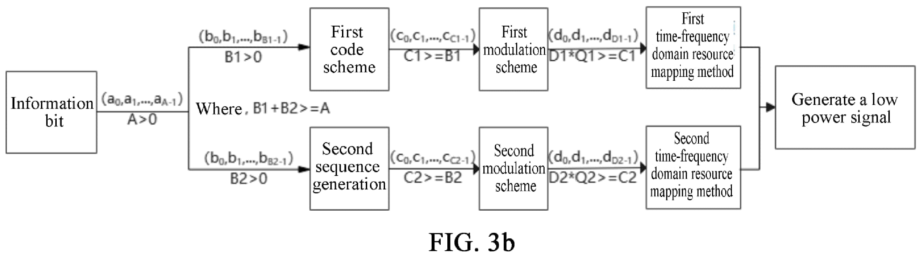

FIG. 3b is a schematic diagram of generation of another low power signal according to an embodiment of the present application. As shown in FIG. 3b, bit information includes first bit information and second bit information. An OOK symbol is generated by the first bit information according to at least one of a first sequence generation formula, the first modulation scheme, or the first code scheme. A second sequence is generated by the second bit information according to a second sequence generation method. The OOK symbol and the second sequence are mapped to a time-frequency domain resource according to a first mapping method and a second mapping method, respectively, and finally the low power signal is generated through IFFT. The generation of the second sequence comprises determining at least one of a candidate sequence pool, the number of sequences for indicating bit information, an initial value of sequence generation, a sequence type, or a sequence formula. The second modulation scheme includes selecting a second sequence to be transmitted according to a specific number of bits of information. The second sequence is carried on a mapping resource of a first position of the OOK symbol through a second time-frequency resource mapping method. The first bit information and the second bit information may be the same information or different information or related information.

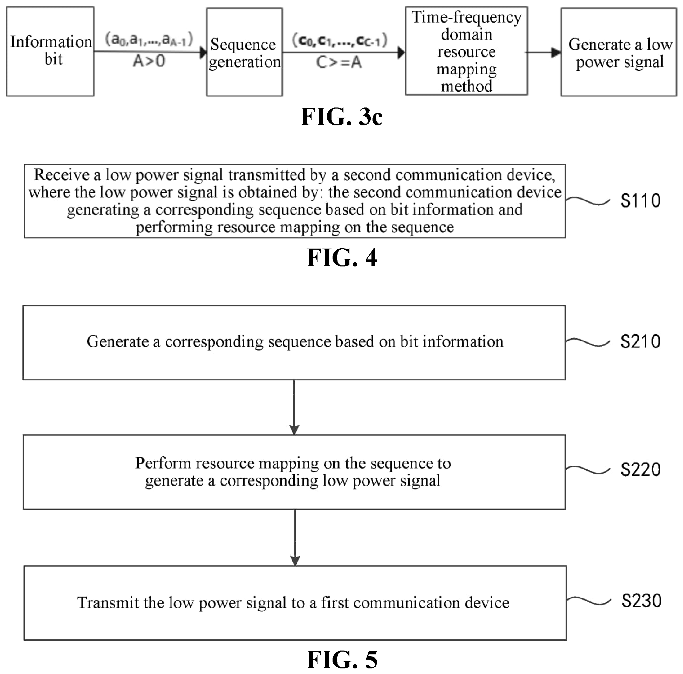

FIG. 3c is a schematic diagram of generation of a low power signal according to an embodiment of the present application. As shown in FIG. 3c, a sequence is generated by bit information according to a sequence generation formula, resource mapping is performed, and finally, the low power signal is generated. Alternatively, the bit information includes two portions of information, where the two portions of information include UE group indication information and UE subgroup indication information. For example, the sequence generation formula includes two portions: second sequence generation and OOK symbol generation, where an OOK symbol is for indicating UE group information, and a second sequence transmitted at a first position of the OOK symbol is for indicating UE subgroup information. In some embodiments, a final time domain signal is obtained by the bit information through the sequence generation formula, resource mapping, and IFFT.

In FIG. 3a and FIG. 3b, the UE may select any one or a combination of more of a plurality of operations to generate the low power signal. For example, encoding, modulation, and sequence generation are optional. For example, the low power signal generation process may involve only encoding, only modulation, only sequence generation, or a combination of encoding (and/or modulation and/or sequence generation) with resource mapping.

In the specification of the present application, the codeword represents one sequence by encoding raw data according to the first code scheme, or one sequence obtained after performing modulation and encoding operations on the raw data according to the first modulation and code scheme, or one sequence directly usable for RE mapping that is derived from 1-bit raw data through operations such as the first modulation and code scheme. For example, after Manchester encoding with a 1/2 code rate, the raw data '0' and '1' yield corresponding codewords '01' and '10', respectively. For example, after Manchester encoding with the 1/2 code rate and OOK modulation, the raw data '0' and '1' yield corresponding codewords $′ {{00 … 000}_{︸}}_{L} , {{11 … 111}_{︸}}_{L} ′$ and $′ {{11 … 111}_{︸}}_{L} , {{00 … 000}_{︸}}_{L} ′$, respectively, where L represents the number of REs or subcarrier spacings (SCSs) occupied/allocated by a corresponding information portion.

In the specification of the present application, the description of the second sequence represents at least one of the sequences described above and/or the second sequence. The description of the first sequence represents a sequence obtained through an OOK modulation symbol and/or bit information subjected to the first code and modulation.

In an embodiment, FIG. 4 is a flowchart of a signal transmission method according to an embodiment of the present application. This embodiment is applied to a case where a low power signal is generated. This embodiment may be performed by a first communication device. The first communication device may be a terminal side. As shown in FIG 4, this embodiment includes: S110.

S110: Receive a low power signal transmitted by a second communication device, where the low power signal is obtained by: the second communication device generating a corresponding sequence based on bit information and performing resource mapping on the sequence.

In an embodiment, the second communication device generates a different sequence based on the bit information, performs resource mapping on the different sequence to obtain a corresponding low power signal, and transmits the low power signal to the first communication device, so that the first communication device may acquire corresponding bit information in the detected low power signal, and trigger the stop or start operation of data transmission itself or physical downlink control channel (PDCCH) monitoring behavior according to the low power signal, thereby greatly saving the power overhead of the first communication device, and realizing the generation of the LP signal based on the OOK symbol and the OFDM sequence.

In an embodiment, the sequence includes at least one of the following:
one or more sequence types;
one or more candidate sequence sets;
a sequence generated by one or more sequence initial values; or
a sequence generated by one or more sequence generation formulas.

In an embodiment, different sequences generated based on the bit information may be of different sequence types, or belong to different candidate sequence sets, or may be sequences generated by different sequence initial values, or may be generated by different sequence generation formulas. In an example, the sequence type may include, but is not limited to, at least one of the following: a ZC sequence; a PN sequence; an m sequence; an SSS sequence; or a PSS sequence.

In an embodiment, the sequence is generated based on at least one of the following:
a corresponding information bit;
a corresponding information type;
a time-domain position; or
a frequency-domain position.

In an embodiment, the sequence may be mapped to different time-domain positions within time-domain resources or to different frequency-domain positions within frequency-domain resources.

In an embodiment, the generating a corresponding sequence based on bit information includes one of the following:
generating a corresponding sequence based on a corresponding information bit; or
selecting a corresponding sequence based on a corresponding information bit, where the information bit includes bit 0 and bit 1.

In an embodiment, one corresponding sequence may be generated based on different information bits of the bit information, or one corresponding sequence may be selected from a plurality of pre-generated sequences based on different information bits of the bit information.

In an embodiment, the generating a corresponding sequence based on bit information includes one of the following:
generating a corresponding sequence based on a corresponding information type; or
selecting a corresponding sequence based on the corresponding information type.

The information type includes at least one of the following: system message change information; CMAS/ETWS information; low power wake up fallback indication information; low power wake up deactivation information; cell-level wake up information; group wake up information; UE-specific wake up information; or information related to a low power synchronization signal.

In this embodiment, one corresponding sequence may be generated according to different information types of the bit information, or one corresponding sequence may be selected from a plurality of pre-generated sequences according to different information types of the bit information.

In an embodiment, the operation of performing resource mapping on the sequence includes: carrying different sequences at first positions of first symbols corresponding to different codewords. Different codewords may be converted from bit information, and different sequences may be carried at the first positions of the first symbols corresponding to the different codewords. For example, a sequence 1 is carried at the first position of the first symbol corresponding to one codeword, and a sequence 2 is carried at the first position of the first symbol corresponding to another codeword.

In an embodiment, a generation manner of the codeword includes one of the following:
Manchester encoding;
cyclic redundancy check (CRC) calculation;
pulse interval encoding (PIE);
RM coding; or
bi-phase space coding (FM0).

In an embodiment, the performing resource mapping on the sequence includes one of the following:
sequences carried at different frequency-domain positions of the first position being different; or
sequences carried at first positions of different frequency-domain positions being different.

In an embodiment, the frequency-domain position includes at least one of the following: a starting frequency-domain position of a first position of a first symbol; a resource block (RB) starting position of a first position of a first symbol; the number of RBs allocated to a first position of a first symbol; an RB end position of a first position of a first symbol; or the number of available resource elements (REs) at a first position of a first symbol.

In an embodiment, the performing resource mapping on the sequence includes one of the following:
sequences carried at different time-domain positions of the first position being different; or
sequences carried at first positions of different time-domain positions being different.

In an embodiment, the time-domain position includes at least one of the following: a starting time-domain position of a first position of a first symbol; a starting OFDM symbol or slot position of a first position of a first symbol; a time-domain end position of a first position of a first symbol; a starting sampling point position of a first position of a first symbol; or a sampling point end position of a first position of a first symbol.

In an embodiment, the performing resource mapping on the sequence includes one of the following:
sequences corresponding to different beam directions being the same; or
sequences carried at the first position corresponding to different beam directions.

The beam directions include: a synchronization signal and physical downlink broadcast channel block (SSB) index; a quasi co-location (QCL) indication; a CSI-RS index; a CSI-RS resource index; and a transmission configuration indication (TCI) state indication. In an example, different beam directions correspond to the same sequence; alternatively, the same sequence is carried at different first positions, and the same sequence carried at different first positions corresponds to different beam directions; alternatively, different sequences are carried at different first positions, and different sequences carried at different first positions correspond to different beam directions.

In an embodiment, the signal includes a preamble portion and an information portion, and sequences transmitted corresponding to the preamble portion and the information portion are different; and performing resource mapping on the preamble portion includes carrying sequences on time-frequency resources before the first one of first symbols or before the first symbol.

In an embodiment, the time-frequency resources before the first symbol include at least one of the following: a slot before a first symbol; an OFDM symbol before a first symbol; adjacent frequency-domain resources within the same frequency band as the frequency-domain resources occupied by a first symbol; or frequency-domain resources in an adjacent frequency band of the frequency-domain resources occupied by the first symbol.

In an embodiment, the performing resource mapping on the sequence includes one of the following:
sequences corresponding to first positions for transmitting different first information being different; or
sequences carried on first symbols for transmitting different first information being different.

In an example, the sequences corresponding to first positions for transmitting different first information being different may be understood in a way that first positions for transmitting at least two pieces of different first information carry different sequences, and the first positions may belong to the same first symbol or different first symbols; and the sequences carried on first symbols for transmitting different first information being different may be understood in a way that first symbols for transmitting at least two pieces of different first information carry different sequences, and the first symbols for transmitting at least two pieces of different first information may be the same first symbol or different first symbols.

In an embodiment, the first information includes at least one of the following: system message change information; CMAS/ETWS information; low power wake up fallback indication information; low power wake up deactivation information; cell-level wake up information; group wake up information; UE-specific wake up information; or information related to a low power synchronization signal.

In an embodiment, the first symbol carrying the sequence is for indicating first information or group information; the sequence is for indicating the first information, the group information, or subgroup information corresponding to the group information, where the time-domain or frequency-domain resources at the first position within the first symbol are for carrying sequences.

In an embodiment, in a case where the time-domain or frequency-domain resources at the first position within the first symbol are for carrying sequences, a candidate sequence pool is determined based on first configuration information. The first configuration information is the high layer configuration information in the above-mentioned embodiment, and may be simply referred to as configuration information. In a case where the time-domain or frequency-domain resources at the first position within the first symbol are for carrying sequences, the second communication device may determine the candidate sequence pool based on the first configuration information, and the first communication device may detect the low power signal based on sequences in the determined candidate sequence pool.

In an embodiment, transmission resources for carrying the sequences or information indicated by the sequences are determined by at least one of the following parameters:
a modulation rate or a coding rate of a first type of indication information;
a number of first positions, a maximum number of first positions, or a minimum number of first positions included in a first symbol to which the first type of indication information corresponds;
a number of first positions to which a specific codeword corresponds;
a number of specific codewords;
a number of codewords to which a first type of indication information corresponds;
a number of codewords to a CRC bit to which a first type of indication information corresponds;
a length of the first position of the first symbol, a number of occupied subcarriers, or a number of REs;
a number of bits of a first type of indication information;
a number of CRC bits to which the first type of indication information corresponds;
a number of bits of the information indicated by the sequences;
a number of repeated transmissions of information indicated by the sequences;
a number of frequency hopping of the information indicated by the sequences;
a length of sequences;
a mapping method of sequences; or
a number of sequences usable for each resource, or a number of information bits can be carried by each resource.

In an embodiment, sequences carried at a plurality of first positions of the first symbol are the same; or each of the different sequences carried by the first symbol is repeatedly or frequency-hopping transmitted over a plurality of consecutive first positions of a first symbol.

In an embodiment, the first symbol includes at least one of an OOK symbol, an FSK symbol, or an OFDM symbol.

In an embodiment, FIG. 5 is a flowchart of another signal transmission method according to an embodiment of the present application. This embodiment is applied to a case where a low power signal is generated. This embodiment may be performed by a second communication device. The second communication device may be a base station side. As shown in FIG 5, this embodiment includes: S210 to S230.

S210: Generate a corresponding sequence based on bit information.

S220: Perform resource mapping on the sequence to generate a corresponding low power signal.

S230: Transmit the low power signal to a first communication device.

In an embodiment, the sequence includes at least one of the following:
one or more sequence types;
one or more candidate sequence sets;
a sequence generated by one or more sequence initial values; or
a sequence generated by one or more sequence generation formulas.

In an embodiment, the sequence is generated based on at least one of the following:
a corresponding information bit;
a corresponding information type;
a time-domain position; or
a frequency-domain position.

In an embodiment, the generating a corresponding sequence based on bit information includes one of the following:
generating a corresponding sequence based on a corresponding information bit; or
selecting a corresponding sequence based on a corresponding information bit, where the information bit includes bit 0 and bit 1.

In an embodiment, the generating a corresponding sequence based on bit information includes one of the following:
generating a corresponding sequence based on a corresponding information type; or
selecting a corresponding sequence based on a corresponding information type.

The information type includes at least one of the following: system message change information; CMAS/ETWS information; low power wake up fallback indication information; low power wake up deactivation information; cell-level wake up information; group wake up information; UE-specific wake up information; or information related to a low power synchronization signal.

In an embodiment, the performing resource mapping on the sequence includes: carrying different sequences at first positions of first symbols to which different codewords corresponds.

In an embodiment, a generation manner of the codeword includes one of the following:
Manchester encoding;
cyclic redundancy check (CRC) calculation;
pulse interval encoding (PIE);
RM coding; or
bi-phase space coding (FM0).

In an embodiment, the performing resource mapping on the sequence includes one of the following:
sequences carried at different frequency-domain positions of the first position being different; or
sequences carried at first positions of different frequency-domain positions being different.

In an embodiment, the frequency-domain position includes at least one of the following: a starting frequency-domain position of a first position of a first symbol; a resource block (RB) starting position of a first position of a first symbol; the number of RBs allocated to a first position of a first symbol; an RB end position of a first position of a first symbol; or the number of available resource elements (REs) at the first position of the first symbol.

In an embodiment, the operation of performing resource mapping on the sequence includes one of the following:
sequences at different time-domain positions of a first position being different; or
sequences at first positions of different time-domain positions being different.

In an embodiment, the time-domain position includes at least one of the following: a starting time-domain position of a first position of a first symbol; a starting OFDM symbol or slot position of a first position of a first symbol; a time-domain end position of a first position of a first symbol; a starting sampling point position of a first position of a first symbol; or a sampling point end position of a first position of a first symbol.

In an embodiment, the performing resource mapping on the sequence includes one of the following:
sequences corresponding to different beam directions being the same; or
sequences carried at the first position corresponding to different beam directions.

The beam directions include: a synchronization signal and physical downlink broadcast channel block (SSB) index; a quasi co-location (QCL) indication; a channel state information reference signal (CSI-RS) index; a CSI-RS resource index; and a TCI state indication.

In an embodiment, the signal includes a preamble portion and an information portion, and sequences transmitted corresponding to the preamble portion and the information portion are different; and performing resource mapping on the preamble portion includes carrying sequences on time-frequency resources before the first one of first symbols or before the first symbol.

In an embodiment, the time-frequency resources before the first symbol include at least one of the following: a slot before a first symbol; an OFDM symbol before a first symbol; adjacent frequency-domain resources within the same frequency band as the frequency-domain resources occupied by a first symbol; or frequency-domain resources in an adjacent frequency band of the frequency-domain resources occupied by a first symbol.

In an embodiment, the performing resource mapping on the sequence includes one of the following:
sequences corresponding to first positions for transmitting different first information being different; or
sequences carried on first symbols for transmitting different first information being different.

In an embodiment, the first information includes at least one of the following: system message change information; CMAS/ETWS information; low power wake up fallback indication information; low power wake up deactivation information; cell-level wake up information; group wake up information; UE-specific wake up information; or information related to a low power synchronization signal.

In an embodiment, the first symbol carrying the sequence is for indicating first information or group information; the sequence is for indicating the first information, the group information, or subgroup information corresponding to the group information, where the time-domain or frequency-domain resources at the first position within a first symbol are for carrying sequences.

In an embodiment, in a case where the time-domain or frequency-domain resources at a first position within a first symbol are for carrying sequences, a candidate sequence pool is determined according to first configuration information.

In an embodiment, transmission resources for carrying the sequences or the information indicated by the sequences are determined by at least one of the following parameters:
a modulation rate or coding rate of a first type of indication information;
a number of first positions, a maximum number of first positions, or a minimum number of first positions included in a first symbol to which a first type of indication information corresponds;
a number of first positions to which a specific codeword corresponds;
a number of specific codewords;
a number of codewords to which a first type of indication information corresponds;
a number of codewords to a CRC bit to which a first type of indication information corresponds;
a length of a first position of a first symbol, a number of occupied subcarriers, or a number of REs;
a number of bits of a first type of indication information;
a number of CRC bits to which a first type of indication information corresponds;
a number of bits of the information indicated by sequences;
a number of repeated transmissions of the information indicated by sequences;
a number of frequency hopping of the information indicated by the sequences;
a length of the sequences;
a mapping method of sequences; or
a number of sequences usable for each resource, or a number of information bits can be carried by each resource.

In an embodiment, sequences carried at a plurality of first positions of the first symbol are the same; or each of the different sequences carried by the first symbol is repeatedly or frequency-hopping transmitted over a plurality of consecutive first positions of a first symbol.

In an embodiment, the first symbol includes at least one of an OOK symbol, an FSK symbol, or an OFDM symbol.

In an embodiment, the signal transmission method applied to the second communication device further includes: configuring a number of bits indicated by a sequence carried on one OFDM symbol or one first position, so that the first communication device detects a low power signal from a sequence in a corresponding sequence pool based on the number of bits.

In an embodiment, the second communication device configures a number of bits that may be indicated by the sequence carried on the OFDM symbol or the first position, and transmits information related to the sequence, the number of bits, and the first position, or the sequence, the number of bits, and the OFDM symbol to the first communication device, enabling the first communication device to detect the low power signal from the corresponding sequence in the candidate sequence pool. In an embodiment, if the number of first positions is less than the number of first positions required for the sequence, the first communication device extends the number of candidate sequences by default until mapping resources corresponding to the first positions satisfy mapping resources required for sequence transmission.

In an embodiment, the signal transmission method applied to the second communication device further includes: receiving a first feature related to the low power signal transmitted by the first communication device, where the first feature is a feature that the first communication device needs to support.

In an embodiment, the first feature includes at least one of the following:
support for detecting or receiving sequences or sequences carried on a first position of a first symbol;
support for a maximum number of bits carried by sequences;
support for a maximum number of bits carried by a first symbol;
support for a maximum number of sequences detected within a specific time or specific resources;
support for a number of candidate sequence pools;
support for a maximum number of candidate sequences for transmission; or
support for a capability of serving cell measurement relaxation, where measurements include an SSB-based measurement, a CSI-RS-based measurement, a TRS-based measurement, a PRS-based measurement, a PTRS-based measurement, or a CRS-based measurement.

It should be noted that the explanations of parameters such as the sequence and the first configuration information involved in the signal transmission method applied to the second communication device may be found in the descriptions of the corresponding embodiments of the information transmission method applied to the first communication device, which are not detailed herein.

The method in the above-mentioned embodiment may also be used in a scenario where the first communication device transmits data information to the second communication device. The first communication device generates different sequences based on the bit information, performs resource mapping on the different sequences to obtain corresponding low power signals, and transmits the low power signals to the second communication device, so that the first communication device may generate and transmit the low power signals with low power consumption, and meanwhile, the coexistence of the low power signals and conventional signals/channels is ensured, which is beneficial for the second communication device to receive the low power signals transmitted by the first communication device.

In a first embodiment, taking the first symbol being the OOK symbol as an example, resource mapping of carrying sequences on the first position of the OOK symbol is described.

Manchester encoding is used to generate N types of codewords. On a first type of codeword, or on a first position of an OOK symbol to which the first type of codeword corresponds, a sequence I is carried; and on a second type of codeword, or on a first position of an OOK symbol to which the second type of codeword corresponds, a sequence II is carried.

In some embodiments, the OOK symbol indicates a first type of indication information. The first type of indication information is Manchester-coded to obtain corresponding codewords, where sequences carried in first positions of OOK symbols corresponding to different codewords are different. Different sequences may include, but are not limited to, at least one of the following: different sequence types, different candidate sequence sets, different initial values of the same sequence type, or different sequence generation formulas. For other codewords, the mapping method of sequences follows the same principle.

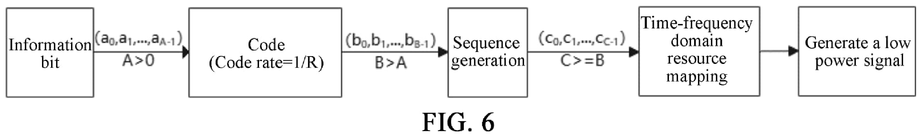

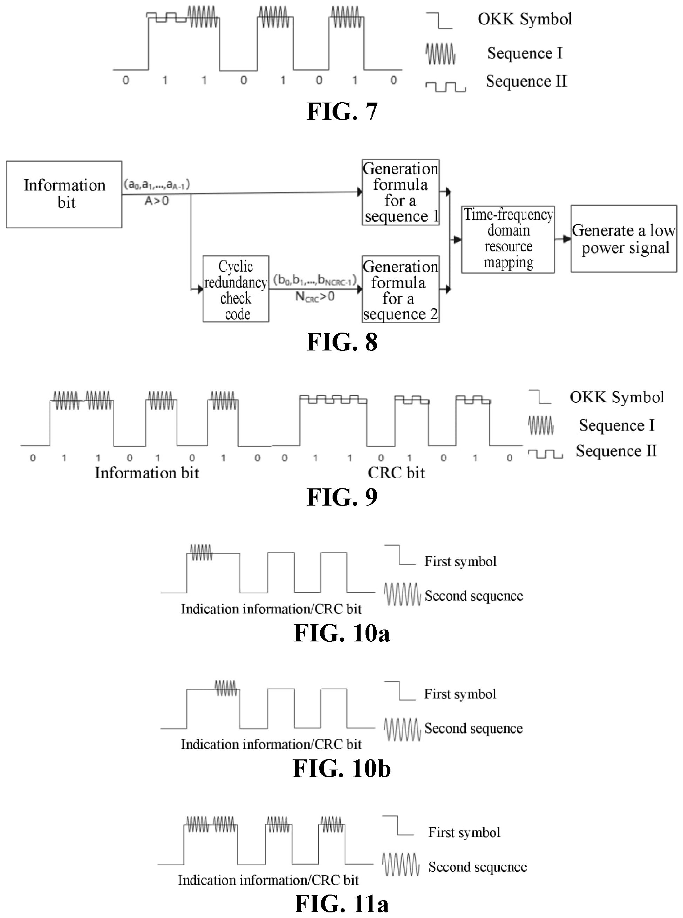

FIG. 6 is a schematic diagram of generation of a low power signal where different sequences are carried at first positions of different codewords according to an embodiment of the present application. As shown in FIG. 6, bit information is '0111'. After Manchester encoding with a 1/2 code rate, a codeword corresponding to '1' is '10', and a codeword corresponding to '0' is '01'.A first position of an OOK symbol corresponding to the codeword '10' carries a sequence derived from the sequence 1, and a first position of an OOK symbol corresponding to the codeword '01' carries a sequence derived from the sequence 2. FIG. 7 is a schematic diagram of a time-domain signal where different sequences are carried at first positions of different codewords according to an embodiment of the present application. As shown in FIG. 7, the first position corresponding to the codeword '10' carries the sequence I, and the first position corresponding to the codeword '01' carries the sequence II. Optionally, the sequence I is a sequence derived from a PN sequence 1, and the sequence II is a sequence derived from a PN sequence 2.

In a second embodiment, taking the first symbol being the OOK symbol as an example, resource mapping of carrying sequences on the first position of the OOK symbol is described.

In some embodiments, the OOK symbol indicates a first type of indication information. The first type of indication information is subjected to cyclic redundancy check to generate CRC bit information. Bit information or sequences carried at the first positions of the codewords or OOK symbols corresponding to the first type of indication information and the CRC bit information are different. The different sequences may include, but are not limited to, at least one of the following: different sequence types, different candidate sequence sets, different initial values of the same sequence type, or different sequence generation formulas.

In some embodiments, the first position corresponding to the first type of indication information carries the sequence I, and the first position corresponding to the CRC bit carries the sequence II.

FIG. 8 is a schematic diagram of generating a low power signal where an information bit and a CRC bit carry different sequences according to an embodiment of the present application. As shown in FIG. 8, bit information is '01101010', and a first position of an OOK symbol corresponding to the information bit carries the sequence I obtained by a generation formula for the sequence 1. The CRC bit generated corresponding to the bit information is '01101010' (i.e., N_{CRC}=8). The first position of the OOK symbol corresponding to the CRC bit carries the sequence II obtained by a generation formula for the sequence 2. FIG. 9 is a schematic diagram of a time-domain signal where an information bit and a CRC bit carry different sequences according to an embodiment of the present application. As shown in FIG. 9, a first position of an OOK symbol corresponding to the information bit carries the sequence I. A first position of an OOK symbol corresponding to the CRC bit carries the sequence II. Optionally, the sequence I is a sequence derived from the sequence 1, and the sequence II is a sequence derived from the sequence 2. Alternatively, the sequence 1 is a ZC sequence, and the sequence 2 is a PN sequence, an m sequence, an SSS sequence, or a PSS sequence. Optionally, the sequence 1 and the sequence 2 are PN sequences generated with different initial values. Optionally, the sequence 1 is a sequence selected from a sequence pool 1, and the sequence 2 is a sequence selected from a sequence pool 2, where at least the number of sequences, the type of sequences, the length of sequences, or initial values of sequences in the sequence pool 1 and the sequence pool 2 are different.

The sequence I and the sequence II, or the sequence I to a sequence N, are generated in at least one of the following methods:
1) Generate using the same sequence generation formula with different initial values.
2) Generate using different sequence generation formulas.
3) Belong to different sequence types.
4) Map to different time-frequency domain resources.
5) Carry different indication information.

In some embodiments, a mapping resource of the first position of the OOK symbol is an available transmission resource of the sequence.

In some embodiments, when a first preset condition is satisfied, the time-frequency domain resource for sequence mapping is within or includes at least one of the following resource ranges:
a mapping resource at the first position of the OOK symbol for the CRC bit of the first type of indication information;
a mapping resource at a first position of an OOK symbol for a specific codeword of the CRC bit of the first type of indication information;
a mapping resource at a first position of the OOK symbol for the first type of indication information; or
a mapping resource at a first position of an OOK symbol for a specific codeword of the first type of indication information.

FIG. 10a is a schematic diagram of carrying a sequence at a first position corresponding to a codeword according to an embodiment of the present application. As shown in FIG. 10a, the sequence is mapped onto a mapping resource at a first position corresponding to a first '01' codeword of indication information/a CRC bit. FIG. 10b is a schematic diagram of carrying a sequence at a first position corresponding to a codeword according to an embodiment of the present application. As shown in FIG. 10b, the sequence is mapped onto a mapping resource at a first position corresponding to a first '10' codeword of indication information/a CRC bit.

In an embodiment, the first preset condition includes at least one of the following:
the first type of indication information adopts Manchester encoding;
the first type of indication information adopts one or more one or more transitions between the first position and the second position as a codeword;
the first type of indication information includes at least one of the following: common information (e.g., meteorological messages, earthquake disasters, and CMAS/ETSW information included in system messages), paging information, full wake up information, UE group wake up information, UE group ID, and cell ID;
the sequence carries at least one of time-domain timing, synchronization information, symbol ID, UE subgroup ID, UE subgroup wake up information, time-frequency domain position information, or cell ID; or
the UE supports the detection/reception of an LP-WUS that carries a sequence at a first position of an OOK symbol.

In the LP-WUS generated according to the above-mentioned solution, in addition to performing envelope detection, demodulation, or decoding, the UE may also perform sequence correlation detection on a receiving side, which is beneficial for improving detection performance.

In some embodiments, the second sequence is mapped onto a mapping resource of a specific codeword, where the specific codeword includes at least one of the following:
a codeword generated corresponding to first indication information;
a codeword used corresponding to the first indication information;
consecutive 1 elements or non-zero elements in the codeword corresponding to the first indication information;
a codeword corresponding to a CRC bit obtained from the first indication information; or
consecutive 1 elements or non-zero elements in the codeword corresponding to the CRC bit obtained from the first indication information.

The specific codeword is a Manchester-coded codeword. For example, the second sequence is mapped onto a final mapping resources corresponding to '1' in a codeword '10' corresponding to bit 1 of the first indication information.

In a third embodiment, taking the first symbol being the OOK symbol as an example, resource mapping of carrying sequences on the first position of the OOK symbol is described.

Sequences carried at different frequency-domain positions of the first position are different, alternatively, sequences carried at the first positions of different frequency-domain positions differ. The frequency-domain position includes at least one of the following: a starting frequency-domain position of the first position of the OOK symbol; a starting RB position of the first position of the OOK symbol; the number of resource blocks (RBs) allocated to the first position of the OOK symbol; an RB end position of the first position of the first symbol; or the number of available resource elements (REs) at the first position of the OOK symbol. The sequence includes at least one of the following: at least one sequence type; at least one candidate sequence set; a sequence generated by at least one sequence initial value; or a sequence generated by at least one sequence generation formula.

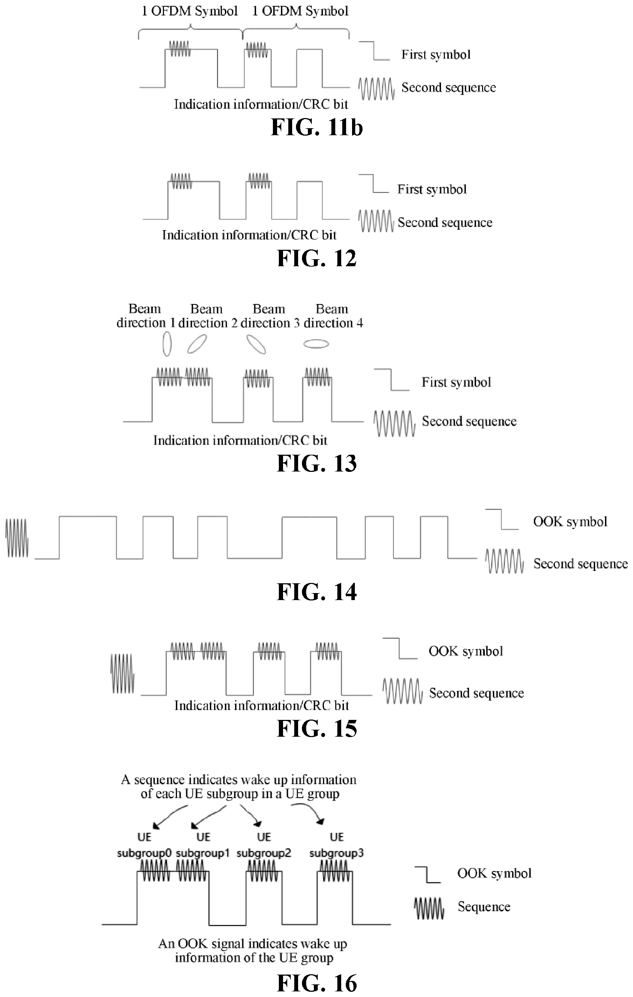

In some embodiments, the second sequence may be repeatedly or frequency-hopping transmitted over mapping resources of a plurality of first positions. FIG. 11a is a schematic diagram of repeated transmission of a second sequence across a plurality of first positions according to an embodiment of the present application. As shown in FIG. 11a, the second sequence is repeatedly transmitted across four first positions. FIG. 11b is a schematic diagram of transmission of a second sequence at first positions of different frequency-domain positions according to an embodiment of the present application. As shown in FIG. 11b, the frequency-domain positions to which the second sequence belongs at the first one of first positions and the second one of first positions are different.

In a fourth embodiment, taking the first symbol being the OOK symbol as an example, resource mapping of carrying sequences on the first position of the OOK symbol is described.

Sequences carried at different time-domain positions of the first position are different, alternatively, sequences carried at the first positions of different time-domain positions differ. The time-domain position includes at least one of the following: a starting time-domain position of the first position of the OOK symbol; a starting OFDM symbol/slot position of the first position of the OOK symbol; a time-domain end position of the first position of the OOK symbol; a starting sampling point position of the first position of the OOK symbol; or a sampling point end position of the first position of the OOK symbol. Differences in the sequences include at least one of the following: at least one sequence type; at least one candidate sequence set; a sequence generated by at least one sequence initial value; or a sequence generated by at least one sequence generation formula.

In some embodiments, the second sequence is transmitted on mapping resources spaced at intervals of x-first-position mapping resources across a plurality of available mapping resources. FIG. 12 is a schematic diagram of transmission of a second sequence on available mapping resources spaced at intervals of one first position according to an embodiment of the present application. As shown in FIG. 12 below, when x equals 1, the second sequence is transmitted on mapping resources of the first one and the third one of first positions.

In a fifth embodiment, sequences corresponding to different beam directions are the same, or different sequences carried at a first position correspond to different beam directions. The beam direction includes at least one of the following: an SSB index; a QCL indication; a CSI-RS index; a CSI-RS resource index; or a TCI state indication.

In some embodiments, the second sequence may be transmitted over mapping resources at a plurality of first positions, with information such as a beam direction, a quasi-co-location type, a group index, and a TCI state indication differing for the same second sequence transmitted at different first positions. FIG. 13 is a schematic diagram of the configuration of different beam directions for the same sequence according to an embodiment of the present application. As shown in FIG. 13, the beam directions for four second sequences carried at a first position of an OOK signal corresponding to first indication information or a CRC bit are a beam direction 1, a beam direction 2, a beam direction 3, and a beam direction 4, respectively, that is, the beam directions for the same second sequence are different.

In a sixth embodiment, taking the first symbol being the OOK symbol as an example, a process of carrying a sequence on resources preceding the OOK symbol is described.

The sequence is carried before a first OOK symbol or on a time-frequency resource before the OOK symbol. The time-frequency domain resource includes at least one of the following: a slot before the OOK symbol; an OFDM symbol before the OOK symbol; adjacent frequency-domain resources within the same frequency band as the frequency-domain resources occupied by the OOK symbol; or frequency-domain resources in an adjacent frequency band of the frequency-domain resources occupied by the OOK symbol.

In some embodiments, the second sequence is mapped onto time-frequency domain resources preceding mapping resources of the primary first sequence corresponding to the first indication information, or onto an adjacent slot or OFDM symbol relative to the mapping resources of the primary first sequence corresponding to the first indication information. FIG. 14 is a schematic diagram of transmission of a sequence on a slot before an OOK symbol according to an embodiment of the present application. As shown in FIG. 14, a second sequence is transmitted on at least one slot before the OOK symbol.

In some embodiments, the second sequence is transmitted before time-domain or frequency-domain resources of a primary first sequence corresponding to first indication information, and is transmitted on a mapping resource of each codeword corresponding to the first indication information or a CRC bit generated by the first indication information. FIG. 15 is a schematic diagram of transmission of a sequence before an OOK symbol and at a first position of the OOK symbol according to an embodiment of the present application. As shown in FIG. 15, a second sequence is transmitted on at least one slot before the OOK symbol and is transmitted at the first position of the OOK symbol.

Optionally, the second sequence is configured to acquire first channel information. The first channel information includes at least one of the following: time-domain/frequency-domain synchronization information; reference signal received power (RSRP); or assistance in first sequence detection.

Optionally, the second sequence includes at least one of the following: a known sequence; a predefined sequence; a PSS; an SSS; or a TRS. The known sequence or the predefined sequence is a sequence generated by using known index information such as a cell ID or symbol ID.

Optionally, the user equipment acquires the first channel information according to the two closest second sequences on time-domain or frequency-domain resources. The time-domain or frequency-domain resources include second sequences on different consecutive frequency-domain resources, REs, or RBs within the same symbol. The time-domain or frequency-domain resources include second sequences on the same consecutive frequency-domain resources, REs, or RBs across different symbols.

From the third embodiment to the sixth embodiment, the first sequence is one or more OOK symbols or one or more Manchester codewords.

In a seventh embodiment, taking the first symbol being the OOK symbol as an example, an implementation process of carrying sequences at a first position of the OOK symbol is described.

Sequences corresponding to first positions transmitting different information are different, alternatively, sequences carried on OOK symbols transmitting different information are different. The first information includes at least one of the following: system message change information; commercial mobile alert system (CMAS)/earthquake and tsunami warning system (ETWS) information; LP-WUS fallback indication information; LP-WUS deactivation information; cell-level wake up information; group wake up information; UE-specific wake up information; or information related to a low power synchronization signal (LP-SS).

In some embodiments, sequences carried between first positions corresponding to at least two pieces of first information are different.

In some embodiments, differences in the sequences include: sequences carried at first positions corresponding to different first information belonging to different sequence types; the sequences carried at the first positions corresponding to different first information having different initial values of sequence generation; and the sequences carried at the first positions corresponding to different first information having different sequence lengths. The information type is added to the initial value of sequence generation, or the initial sequence generation value is determined by the information type.

For example, the first x1 first positions of the OOK signal indicate the system message change information; and an (x1+1)-th first position to an (x1+x2)-th first position indicate the group wake up information. The PN sequence 1 is carried on the first x1 first positions; and the PN sequence 2 is carried on the (x1+1)-th first position to the (x1+x2)-th first position. The initial value of sequence generation for the PN sequence 1 is determined by an information type index of the system change information. The initial value of sequence generation for the PN sequence 2 is determined by an information type index of the group wake up information.

In an eighth embodiment, an OOK symbol indicates first information or group information, and a sequence indicates at least one of the following: first information; group information; subgroup information corresponding to the group information, where time-domain/frequency-domain resources of the first position of the OOK symbol are for carrying the sequence.

Optionally, the group information includes UE group wakeup; and the subgroup information includes UE subgroup wakeup. Optionally, the group information includes full wake up, and the subgroup information includes UE group wake up. Optionally, the group information includes cell information; and the subgroup information includes UE group information. The cell information includes at least one of cell-specific information, a cell identity, and full wake up (i.e., at least all user equipment within the cell that supports detecting LP-WUS is awakened).

For example, the OOK symbol indicates that all UEs in a UE group 1 is awakened, and the sequence carried at the first position of the OOK symbol indicates whether each UE in the UE group 1 is awakened or a moment/symbol ID at which each UE is awakened.

Optionally, the information indicated by the OOK symbol is associated with the information indicated by the sequence carried at the first position of the OOK symbol.

Optionally, the number of first positions of the OOK symbol indicating the group information is greater than the number of sequences required to indicate the subgroup information.

For example, the group information is 1 bit, and the subgroup information is 2 bits. It indicates that there is one first position of OOK symbol to which the UE group 1 corresponds, and there are four sequences in the candidate sequence pool, i.e. each sequence may indicate 2 bits of information. Therefore, the number of sequences required to indicate the subgroup information is 1. The sequence corresponding to the subgroup information is carried on the first position of the corresponding OOK symbol indicating the group information. Indicating the UE group 1 refers to indication information for indicating a first UE group.

Optionally, if the number of sequences required to indicate all subgroup information is N, the first N first positions among the first positions of all OOK symbols transmitting the indication information are for carrying the required N sequences.

Optionally, if the number of sequences required to indicate all subgroup information is N, and the number of first positions of all OOK symbols transmitting the indication information is m times N (i.e., the number of first positions is greater than N* (m-1) and less than N* (m +1)), (m-1) first positions are spaced between the first positions for carrying the required sequences and/or between the first positions of every two adjacent required sequences.

Optionally, if the number of sequences required to indicate all subgroup information is N, and the number of first positions of all OOK symbols transmitting the indication information is m times N (i.e., the number of first positions is not less than N*m and less than N*(m+1)), each sequence required to be transmitted is repeatedly transmitted over m consecutive first positions.

In some embodiments, more first positions of an OOK symbol usable for carrying sequences exist, and mapping resources of the OOK symbol are grouped herein. Optionally, an OOK symbol resource corresponding to each group information in the first type of indication information or a first position resource of the corresponding OOK symbol is defined as a resource group. Optionally, group ID or subgroup ID information related to/corresponding to the group information is carried by the sequence. Optionally, a sequence indicating the corresponding group ID or subgroup ID is mapped onto the resource group of the group information. FIG. 16 is a schematic diagram of the implementation of carrying a sequence indicating related subgroup information on a first position according to an embodiment of the present application. As shown in FIG.16, the sequence carried on the first position of the OOK signal indicating wake up information for a UE group is for indicating wake up information for each UE subgroup within the UE group.

In some embodiments, more first positions of the OOK symbol usable for carrying sequences exist, and mapping resources of the OOK symbol are grouped herein. Optionally, each resource group includes resources for a single mapping of the sequence to be carried. Optionally, if the number of the resource groups is greater than one, the required sequence is repeatedly transmitted over the plurality of resource groups.

In a ninth embodiment, if time-domain/frequency-domain resources of first positions of an OOK symbol are for carrying sequences, a candidate sequence pool is determined based on configuration information. Optionally, UE detects an LP-WUS at a receiving terminal based on a sequence in the determined candidate sequence pool.

In some embodiments, the number of information bits indicated by the sequence, a size of the candidate sequence pool, a candidate sequence set, a total/minimum number of candidate sequences, or transmission resources of the sequence or information indicated by the sequence are determined by at least one of the following:
a modulation rate or coding rate of a first type of indication information;
a number of first positions, a maximum number of first positions, or a minimum number of first positions included in an OOK symbol to which the first type of indication information corresponds;
a number of first positions to which a specific codeword corresponds;
a number of specific codewords;
a number of codewords to which the first type of indication information corresponds;
a number of codewords corresponding to a CRC bit to which the first type of indication information corresponds;
a length of the first position within the OOK symbol, the number of occupied subcarriers, or the number of REs;
a number of bits of the first type of indication information;
a number of CRC bits corresponding to the first type of indication information;
a number of bits of the information indicated by the sequences;
a number of repeated transmissions of the information indicated by the sequences;
a number of frequency hopping of the information indicated by the sequences;
a length of the sequences;
a mapping method of sequences; or
a number of sequences usable for each resource, or the number of information bits can be carried by each resource.

In some embodiments, if the sequence is not repeatedly transmitted, a size of mapping resources of the sequence is not greater than that of the available first position.

In some embodiments, if the sequence is repeatedly or frequency-hopping transmitted, the size of the mapping resource of the sequence in a single transmission and the size of the mapping resource of the available first position have a multiple relationship.

In some embodiments, the number of bits of the first type of indication information is N1, the number of CRC bits corresponding to the first type of indication information is N_{CRC}, each bit of information corresponds to M1 bits of codeword, and the number of information bits indicated by the sequence is N2. In some embodiments, the number of bit information that any sequence in the candidate sequences may indicate is not less than function ( $\frac{N 2}{N 1 ∗ M 1}$) or function ( $\frac{N 2}{{N}_{CRC} ∗ M 1}$) or function ( $\frac{N 2}{\left(N1+{N}_{CRC}\right) ∗ M 1}$) bits.

In some embodiments, the number of bits indicated by the OOK symbol is N1, the number of CRC bits corresponding to the first type of indication information is N_{CRC}, each bit of information corresponds to M1 bits of codeword, the number of 1s in each codeword or the number of corresponding first positions is R/2, and the number of information bits indicated by the sequence is N2.In some embodiments, the number of bit information that the candidate sequences may indicate is not less than function ( $\frac{N 2}{N 1 ∗ R / 2}$) or function ( $\frac{N 2}{{N}_{CRC} ∗ R / 2}$) or function ( $\frac{N 2}{\left(N1+{N}_{CRC}\right) ∗ R / 2}$) bits.

In some embodiments, the number of bits of the OOK symbol is N1, the number of CRC bits corresponding to the first type of indication information is N_{CRC}, each bit of information corresponds to M1 bits of codeword, the number of 1s in each codeword or the number of the corresponding first positions is R/2, the number of information bits indicated by the sequence is N2, and the number of repeated transmissions of the sequence is P. In some embodiments, the number of bit information that the candidate sequences may indicate is not less than function ( $\frac{N 2 ∗ P}{N 1 ∗ R / 2}$) or function ( $\frac{N 2 ∗ P}{{N}_{CRC} ∗ R / 2}$) or function ( $\frac{N 2 ∗ P}{\left(N1+{N}_{CRC}\right) ∗ R / 2}$) bits.

In some embodiments, function (·) represents performing at least one of operations of rounding up, rounding down, rounding to the nearest integer, and retaining an original value on inputted '·'.

In some embodiments, the UE determines, based on the (minimum) number of bits required to be indicated by the sequence, a candidate sequence or a candidate sequence pool for indicating information from a plurality of candidate sequences or a plurality of candidate pools.

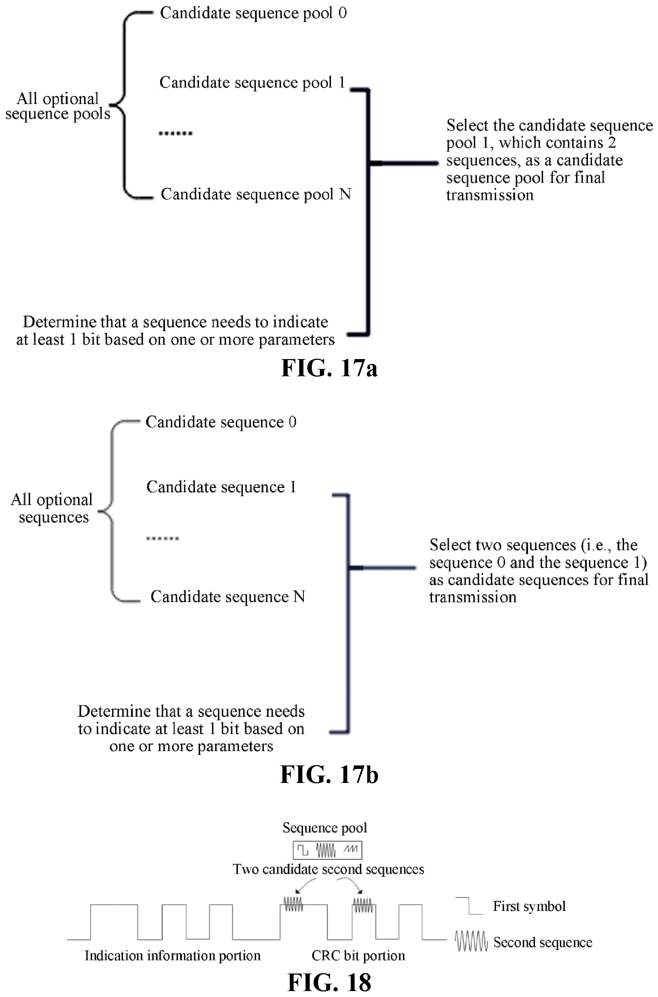

FIG. 17a is a schematic diagram of the implementation of determining a sequence used for transmission according to an embodiment of the present application. As shown in FIG. 17a, in a predefined candidate sequence pool, a candidate sequence pool i includes 2i sequences (e.g., a candidate sequence pool 1 includes two sequences, indicating 1 bit of information). According to the determined minimum indication of 1 bit of information by the sequence and candidate sequence pool information, the sequence pool 1 is ultimately selected from all candidate sequence pools as a sequence pool used for sequence transmission. FIG. 17b is a schematic diagram of the implementation of determining a sequence used for transmission according to an embodiment of the present application. As shown in FIG. 17b, in predefined candidate sequences, each sequence corresponds to one sequence index (arranged in an ascending order), and sequences 0 to (2i - 1) may indicate i bits of information. According to the determined minimum indication of 1 bit of information by the sequence and candidate sequence pool information, the sequence 0 and the sequence 1 are ultimately selected from all the candidate sequences as sequences used for sequence transmission.

FIG. 18 is a schematic diagram of the implementation of selecting a sequence used for transmission from a sequence pool according to an embodiment of the present application. As shown in FIG. 18, for example, N1=4 bits, N_{CRC}=4, M1=1; and N2=2 bits. Since N1 and N_{CRC} are equal, regardless of whether the sequence is mapped onto a CRC bit portion or a first indication information bit portion, candidate sequences indicate at least ceil(0.5) = 1 bit. If any sequence in the candidate sequences may indicate 1-bit information, the candidate sequence includes at least two sequences (i.e. 21=2). From the above-mentioned parameters, it may be seen that a size of a mapping resource of an available first position is twice a size of a mapping resource required for sequence transmission.

In some embodiments, the number of bit information that any sequence in the candidate sequences may indicate is not greater than 2 bits.

Herein, function (·) represents performing at least one of operations of rounding up, rounding down, rounding to the nearest integer, and retaining an original value on inputted '·'.

In a tenth embodiment, a base station configures the number of bits (denoted as N2) that may be indicated by a sequence carried by one symbol or one first position. The UE detects an LP-WUS based on sequences in a corresponding sequence pool.

Optionally, if the number of first positions is less than the number of first positions required for the sequence, the UE extends the number of candidate sequences by default until mapping resources corresponding to the first positions satisfy mapping resources required for sequence transmission.

For example, the first type of information has a total of 2 bits, the number of CRC bits is 4, with 1/2 Manchester encoding, and the number of first positions is 6. The number of bits that the sequence needs to carry is 24 bits. The base station configures that the sequence may indicate 2 bits (a total of 4 candidate sequences, and in this case, even if all first positions are occupied, only 12 bits of information can be transmitted). Then, the UE extends the number of candidate sequences to 16, and in this case, 24 bits of information may be transmitted.

Optionally, if the number of first positions in one symbol is greater than the number of sequences required to be carried, the UE assumes that the sequence is transmitted on the first positions according to a default single transmission method, a repeated transmission method, or a frequency-hopping method.

Optionally, when the number of first positions is greater than the number of first positions required by the sequence, if the base station configures that the sequence may be transmitted repeatedly, the UE defaults that the sequence may indicate N2 bits of information and is transmitted repeatedly on additional or remaining first positions.

Optionally, when the number of first positions is greater than the number of first positions required by the sequence, if the base station does not configure that the sequence may be transmitted repeatedly and the number of first positions satisfies the number of first positions required for the sequence to indicate fewer bits or 1 bit of transmission, the UE defaults that the sequence may indicate 1 bit of information. Optionally, the UE only uses the first two sequences among the candidate sequences as the sequences for transmission to perform relevant detection.

In an eleventh embodiment, a plurality of mapping relationships are included between a first position and a sequence.

In some embodiments, a resource mapping method includes mapping the sequence onto mapping resources of one or more first positions in a specific mapping method. The specific mapping method includes repetition, hopping, full mapping, and segmented mapping. The mapping methods are all based on resource element (RE) mapping.

### Segmented mapping:

In some embodiments, the mapping method of segmented mapping means that a resource size occupied by a sequence is different from a resource size occupied by a first position or a first position of a specific codeword, or the sequence occupies a portion of resources occupied by the first position or the first position of the specific codeword. The resource size includes at least one of allocated time-domain resources, frequency-domain resources, spreading code resources, scrambling code resources, or spatial-domain resources.

In some embodiments, one sequence is mapped onto RB sets occupied by a plurality of first positions, or one frequency-domain segment of the sequence is mapped onto an RB set occupied by one first position, or a plurality of sequences are mapped onto an RB set occupied by one first position.

In some embodiments, mapping resources of one sequence are an integer multiple of mapping resources of one first position or a first position of a specific codeword.

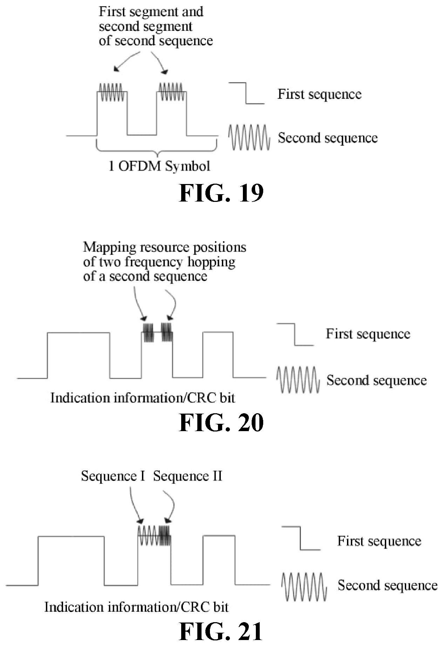

FIG. 19 is a schematic diagram of the implementation of sequence segmented mapping onto two first positions of an OOK-4 symbol according to an embodiment of the present application. As shown in FIG. 19, a second sequence is divided into two segments, namely a first segment and a second segment, which are then mapped onto the two first positions of the OOK-4 symbol respectively. A first sequence shown in FIG. 19 represents a signal portion in the OOK-4 symbol that includes only one transition between a high level and a low level, or a portion that includes only one first position.

In some embodiments, for a plurality of sequences mapped onto a mapping resource of one first position, two of the plurality of sequences or frequency-domain segments of the two sequences or two frequency hopping of the sequences are mapped onto adjacent frequency-domain resources. In some embodiments, an interval between adjacent frequency-domain resources in the frequency-domain segmented mapping of the two sequences is not less than α SCSs, REs, or PRBs, or an interval between adjacent time-domain resources is not less than one OFDM symbol, where α is an integer not less than 1 and not greater than 2*S.

FIG. 20 is a schematic diagram of the implementation of sequence segmented mapping according to an embodiment of the present application. As shown in FIG. 20, two repetitions of the same second sequence are mapped onto adjacent frequency-domain resources by means of frequency-hopping.

In some embodiments, one or more sequences are mapped onto a mapping resource of one first position. FIG. 21 is a schematic diagram of the implementation of another sequence segmented mapping according to an embodiment of the present application. As shown in FIG. 21, two second sequences are mapped onto a mapping resource of one first position.

In some embodiments, the number of RBs occupied by the first position is not less than the number of RBs occupied by a second position. In some embodiments, the number of physical resource blocks (RBs) and frequency-domain positions occupied by the first position is the same as the number of RBs and frequency-domain positions occupied by the second position.

### Full mapping:

In some embodiments, the mapping method of full mapping means that the first position and the sequence occupy the same resource size. The resource size includes a starting RB position in a frequency domain and the number of RBs.

In some embodiments, if the sequence is mapped onto a mapping resource (including at least RBs) at a first position, RB sets occupied by two adjacent frequency hopping of the sequence do not overlap and have no RB/subcarrier spacing.

In some embodiments, within a first period, a maximum number of resources configurable for the first sequence does not exceed 64.

In some embodiments, the number of bits in first indication information is the same as that in second indication information, or the numbers of information bits that may be indicated by one OOK and one sequence are the same.

In some embodiments, resources occupied by non-zero elements in a codeword generated corresponding to the first indication information are defined as available mapping resources.

In some embodiments, an available mapping resource set corresponding to the first indication information is larger than total resources occupied by all sequences. In this case, at least one of following resource mapping rules need to be met:
1) perform resource mapping on all sequences according to a chronological order and/or an order of subcarriers/REs/RBs; or
2) perform resource mapping on all sequences first in the time domain and then in the frequency domain according to a requirement of an interval of every n segments of the first position or every n codewords, where n is an integer greater than or equal to 0; or
3) only n segments of consecutive non-zero elements or n non-zero code elements in each codeword may be for resource mapping of sequences, where n is an integer greater than or equal to 0; or
4) take the resource set occupied by each sequence as a unit, interleave the resource sets of sequences according to a row-entry, column-exit interleaving method, and then map the resource sets to available resources in a sequential mapping method; or
5) perform resource mapping according to an interleaved resource index by taking mapping resources of a consecutive segment of non-zero elements provided by each codeword as a unit.

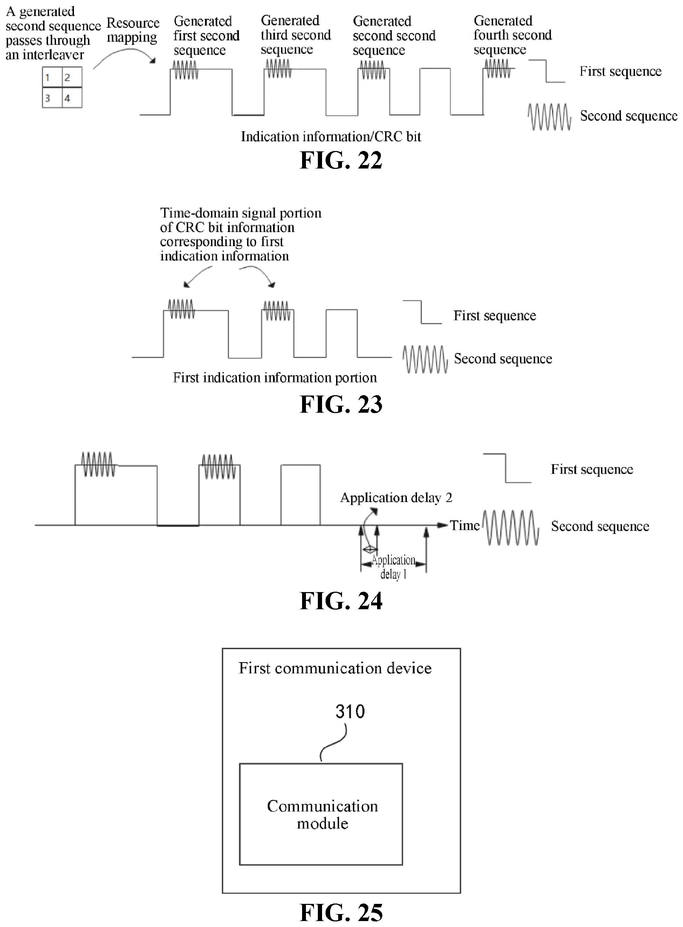

For example, FIG. 22 is a schematic diagram of the implementation of sequence interleaved mapping according to an embodiment of the present application. As shown in FIG. 22, if a first sequence carrying first indication information may provide seven available resource sets, and a total of four sequences are generated to occupy four resource sets, the sequences participating in resource mapping are interleaved in a row-entry, column-exit method. Each resource set represents total mapping resources occupied by one first position or one codeword.

In some embodiments, a transmission method for carrying sequences at a first position of an OOK symbol is applied in an OOK-1 operation mode or in an OOK-4 operation mode with M=1 or M=2.

In a twelfth embodiment, an indication information check method includes at least one of correlation demodulation based on a first sequence, correlation demodulation based on a second sequence, and cyclic redundancy check. The reception of first indication information is completed after the detection of second indication information.

Method 1: When the first indication information is transmitted based on the first sequence, corresponding CRC bit information is generated. The CRC bit information is carried by the first sequence.

In some embodiments, if the second sequence does not carry the second indication information, a CRC checking operation of the first indication information is performed after detecting the second sequence or completing the reception of the second sequence indication information.

In some embodiments, if the second sequence carries the second indication information, the second sequence is transmitted on a mapping resource at a first position that carries a CRC bit.

In some embodiments, if the second sequence carries the second indication information, CRC bit information to which the second indication information corresponds is carried by the second sequence. In some embodiments, the second sequence carrying the CRC bit information to which the second indication information corresponds is transmitted on a mapping resource at a first position that carries a CRC bit.

Method 2: When the first indication information is transmitted based on the first sequence, corresponding CRC bit information is generated. The CRC bit information is carried by the second sequence.

In some embodiments, if the second sequence is not for carrying the second indication information, to improve a spectrum resource utilization rate and shorten detection time, the second sequence may be for carrying the CRC bit information to which the first indication information corresponds.

In some embodiments, the second sequence is for carrying the CRC bit information to which the first indication information corresponds. The second sequence is transmitted on a mapping resource at a first position that carries the first indication information; or the second sequence is transmitted on an adjacent resource following the mapping resource of the first sequence that carries the first indication information.

In some embodiments, if the total number or total number of segments of first positions corresponding to the first indication information is not less than n times the number of CRC bits, the second sequence may be for carrying all bits of the CRC information to which the first indication information corresponds, or the configuration that the second sequence carrying the CRC information corresponding to the first indication information takes effect, where n is an integer not less than 1.

In some embodiments, the mapping rules include at least one of the mapping methods described in Embodiment 1. FIG. 23 is a schematic diagram of the implementation of sequence interval mapping according to an embodiment of the present application. As shown in FIG. 23, two sequences are mapped onto the first one of first positions and a third first position of a first sequence, respectively.

In some embodiments, the first position and the second sequence occupy the same frequency-domain resources.

Before mapping the second sequence to a mapping resource at the first position, the sequence undergoes DFT-s-OFDM transformation or DFT.

In a thirteenth embodiment, the UE performs an exception handling or a conflict resolution mechanism for a transmission mechanism based on OOK and/or sequences carrying indication information.

In some embodiments, if information indicated by the first type of indication information and the sequence is the same, the UE detects at least one of the OOK symbol or the sequence. In some embodiments, if the UE is configured such that information indicated by the first type of indication information and the sequence is the same, and indication information obtained by the UE through sequence-based detection differs from that obtained through OOK symbol-based detection, the UE takes indication information with CRC check bits or indication information that passes a CRC check as finally detected indication information. Otherwise, if CRC checks for both the first type of indication information and the sequence-indicated information are successful, the UE takes indication information obtained through sequence detection as finally detected indication information.

Optionally, the UE determines, based on base station configuration, that the detection of one of the first type of indication information or the sequence-indicated information is valid.

In a fourteenth embodiment, high-layer signaling triggers different information carrying methods for low power information. The UE determines an application delay of indication information indicated by a low power signal based on high-layer signaling configuration.

The UE determines, according to high-layer configuration parameters, whether to map sequences at a first position or whether sequences carry the indication information.

In some embodiments, whether to perform bit information classification is determined based on high-layer configuration. If a high layer configures the UE to support two low power waveforms indicating different information, bit information classification is performed; otherwise, if the high layer configures the UE to support two low power waveforms indicating the same information, low power signals of two waveforms usable for carrying complete indication information are generated; otherwise, if the high layer configures the UE to support only one low power waveform indication, a low power signal is generated by using the configured waveform.

FIG. 24 is a schematic diagram of the implementation of low-power signal indication application latency according to an embodiment of the present application. As shown in FIG. 24, in some embodiments, if the number of bits of first indication information carried by a first sequence follows N1>0, or the number of bits of second indication information carried by the sequence follows N2>0, the UE applies the first indication information after one application delay 1 and applies the second indication information after one application delay 2.The application delay 1 is not less than the application delay 2.

In some embodiments, if the number of bits of the first indication information carried by the first sequence follows N1>0, and the number of bits of the second indication information carried by the sequence follows N2=0, the UE applies the indication information after one application delay 1, where the application delay 2 is 0.

In some embodiments, if the sequence is for carrying a CRC bit to which the first indication information corresponds, the application delay of the first indication information is either the application delay 1 or accumulation of both the application delay 1 and the application delay 2.

In a fifteenth embodiment, a set of second sequences is generated based on bit information. Optionally, one or more initial values are determined based on the bit information, and a set of second sequences is generated according to the one or more initial values.

Optionally, the set of second sequences is carried on one set of first positions, while repetitions of the set of second sequences are carried on another set of first positions, and so on. Optionally, a first set of first positions is for carrying repetitions of a first sequence within the set of second sequences, a second set of first positions is for carrying repetitions of a second sequence within the set of second sequences, and so on.

In some embodiments, the number of repetitions of the set of second sequences or each sequence within the set of second sequences is related to a maximum number of available first positions or is determined by at least one of the parameters configured to determine transmission resources of the sequence in the ninth embodiment.

In a sixteenth embodiment, the second sequence is determined according to at least one of corresponding information bits, a corresponding information type, a time-domain position, or a frequency-domain position. Optionally, the second sequence is generated based on at least one of the number of frequency-domain segments of a first symbol, a frequency-domain segment index where a first position of the first symbol is located, the number of RBs occupied by the first position of the first symbol, a frequency-domain segment index where the first position carrying the second sequence is located, or the number of RBs occupied by the first position carrying the second sequence. Optionally, the second sequence is generated based on at least one of the number of OFDM symbols occupied by the first symbol, an OFDM symbol ID or a slot ID where the first one of first positions of the first symbol is located, or an OFDM symbol ID or a slot ID where the first position carrying the second sequence is located.

In some embodiments, sequences carried on first positions corresponding to information bits and correspondingly generated CRC bits are identical.

In a seventeenth embodiment, the UE transmits a first feature (which may also be referred to as a UE feature) related to a low power signal to the base station, where the first feature includes at least one of the following:
the UE supports detecting or receiving sequences or sequences carried on a first position of a first symbol;
the UE supports a maximum number of bits carried by sequences;
the UE supports a maximum number of bits carried by an OOK symbol;
the UE supports a maximum number of sequences detectable within a specific time or specific resources (e.g., one OFDM symbol or SCS/RE resources occupied by one first position);
the UE supports the number of candidate sequence pools;
the UE supports a maximum number of candidate sequences for transmission;
the UE supports a capability of serving cell measurement relaxation, where measurements include an SSB-based measurement, a CSI-RS-based measurement, a TRS-based measurement, a PRS-based measurement, a PTRS-based measurement, or a CRS-based measurement;
whether the UE supports the first type of indication information and sequence-indicated information carrying the same indication information;
whether the UE supports monitoring low power signals containing sequences;
whether the UE supports monitoring low power signals containing sequences mapped onto mapping resources at a first position;
whether the UE supports monitoring low power signals containing a first sequence;
whether the UE supports monitoring low power signals containing both the first sequence and sequences;
whether the UE supports monitoring one of a plurality of mapping methods for sequences, where the plurality of mapping methods includes: mapping the sequences onto mapping resources at a first position to which first type of indication information corresponds, mapping the sequences onto mapping resources at a first position corresponding to a CRC bit to which the first type of indication information corresponds, segmented mapping, or full mapping;
whether the UE supports sequences carrying CRC bit information corresponding to the first type of indication information; or
whether the UE supports detecting sequences mapped onto the first position that carry CRC bit information to which the first type of indication information corresponds.

In the embodiments of the present application, the resource mapping refers to at least one of the operations: a scrambling operation, a modulo-2 addition operation, an operation of substituting parameters into a generation formula, an operation of multiplication between two generation sequences, or generation sequences and input parameters satisfying a functional relationship. In the embodiments of the present application, for the low power signal, the sequence is generated by a sequence generation formula (O*S) before performing RE mapping. Optionally, O represents the first symbol or the first sequence, and S represents the second sequence. In the embodiments of the present application, the first symbol includes the first sequence, or the first sequence is a sequence expression form of the first symbol, or the first sequence represents a portion of the first symbol including one first position.

In the embodiments of the present application, differences in the sequences further include the sequence I to the sequence N, where N is an integer greater than or equal to 1. A relationship from the sequence I to the sequence N satisfies at least one of the following: different sequence types between sequences, different candidate sequence sets between sequences, different initial values for the same sequence type between sequences, or different sequence generation formulas between sequences.

The sequence numbers described in the embodiments of the present application do not imply a precedence order among items. "A and/or B" as described in the present application represents four cases: both A and B, either A or B, solely A, and solely B.

Conditional handover (CHO) is a handover process executed only when configured execution conditions are met, which introduces a conditional handover function for primary cell (PCell) changes to enhance the reliability and robustness of handover (HO)/secondary cell group (SCG) changes. A specific process includes: 1) the network may provide the UE with up to 8 candidate cell configurations associated with the execution conditions; 2) the UE maintains a connection with a source gNB after receiving a CHO configuration and starts evaluating the CHO execution conditions of candidate cells; 3) if at least one CHO candidate cell satisfies the corresponding CHO execution condition, the UE separates from the source gNB, applies a stored corresponding configuration for the selected candidate cell, synchronizes to the candidate cell, and completes an RRC handover procedure by transmitting an RRCReconfigurationComplete message to a target gNB; and 4) after successfully completing the RRC handover procedure, the UE releases the stored CHO configuration. In a case of failure, if the selected cell is the CHO candidate cell and this is a first recovery, and if the network permits CHO-based recovery, the UE is about to execute the CHO.

In order to enhance the mobility management of the terminal and perform cell handover more quickly, the CHO or CHO evaluation may be triggered by using dynamic signaling to indicate the turning off of a source cell of the UE, where the source cell is a cell that may support a network energy saving function or a PCell allocated to the UE. A layer 1 (L1) signaling design method for source cell turning off indication is described in the following embodiments.

In a nineteenth embodiment, a group-common downlink control information (DCI) format is utilized to indicate at least one of operations: cell turning off and/or activation or deactivation of cell discontinuous transmission (DTX) and/or cell discontinuous reception (DRX) configuration, where the group-common DCI format refers to a DCI format 2_9 with CRC scrambled by cellDTRX-RNTI or NES-RNTI. The DCI format 2_9 is configured to transmit one or more information blocks.

In some embodiments, cell turning off operation indication information refers to information for triggering the UE to perform PCell conditional handover, and/or information indicating the deactivation or turning off of a secondary cell (SCell) for the UE configured with that SCell, and/or information indicating an operation of turning off or turning on of a serving cell, or information indicating the activation of a network energy-saving mode for the serving cell. The serving cell includes the PCell and/or the SCell.

In some embodiments, when DCI format 2_9 indicates the turning on of one serving cell, the UE monitors or receives the DCI format 2_9 on serving cells other than the serving cell. In some embodiments, when the DCI format 2_9 indicates cell turning off for one serving cell, the serving cell is the PCell of at least one UE receiving the DCI format 2_9.

In some embodiments, if the high-layer parameter configuration indicates, via the DCI format 2_9, cell turning on or turning off operation information for one or more cells, a bit width of an information block in the DCI format 2_9 corresponding to the cell turning on or turning off operation is N bits; otherwise, the bit width of the information block in the DCI format 2_9 corresponding to the cell turning on or turning off operation is 0. N is an integer greater than 0.

In some embodiments, the UE determines a starting position of an information block corresponding to indication information in the DCI format according to high-layer parameters. One information block may indicate cell turning off information for one serving cell, cell turning off information for a source cell configured for the UE, or cell turning off information for the source cell for other UE that is also configured with the same source cell. One information block contains at least one bit of information. In some embodiments, one information block contains one bit of information. When the bit indicates a value of '0', it indicates cell on; and when the bit indicates a value of '1', it indicates cell off. Alternatively, when the bit is a value of '1', it indicates cell turning off, and when the bit is a value of '0', this field is reserved. Alternatively, when the bit is a value of '0', it indicates cell turning off, and when the bit is a value of '1', this field is reserved. In some embodiments, one information block contains one piece of bitmap information, where each bit corresponds to cell turning off indication information for a cell or cell group of the UE. The cell or cell group is determined by an associated cell ID or cell group ID. In some embodiments, the UE determines, based on the high-layer parameters, a starting position of an information block corresponding to indication information in the DCI format for a serving cell with a specific cell index.

In some embodiments, one information block indicates the cell turning on or turning off operation for the PCell of the UE and/or the serving cell that supports the network energy-saving mode. In some embodiments, the information for indicating cell turning on/off operations includes two states of indicating a cell turning off operation and reserving the field, or at least one of indicating the cell turning off operation, reserving the field, indicating the cell turning on operation, or indicating that the cell enters the network energy-saving mode.

In a first sub-embodiment, only one information block in the DCI format 2_9 is for indicating serving cell turning off operation information. The one information block is for indicating the cell turning off operation of a serving cell where a bandwidth part (BWP) receiving the DCI format 2_9 is located. In some embodiments, N bits are 1 bit, for indicating cell turning on or tuning off.

In some embodiments, the information in the DCI format 2_9 indicating serving cell turning off and/or turning on operations applies to a serving cell that configures the DCI format 2_9 or a primary cell of the UE.

In some embodiments, if the cell corresponding to the information block in the DCI format 2_9 for indicating cell turning on/off operation information is not the primary cell of the UE, and/or a cell that does not the support network energy-saving mode, the UE ignores the indication information.

In a second sub-embodiment, one or more information blocks in the DCI format 2_9 are for indicating cell turning off operation information of one or more cells. In some embodiments, the UE determines, based on the high-layer parameters, a starting position of an information block corresponding to indication information in the DCI format for one serving cell. The one serving cell includes a serving cell with a specific cell ID or a secondary cell (SCell) or a primary cell (PCell) configured for the UE. In some embodiments, N bits are 1 bit, for indicating indication information for the cell turning off operation corresponding to a serving cell with a specific cell ID.

In a third sub-embodiment, only one information block in the DCI format 2_9 is for indicating serving cell turning off operation information. The one information block is for indicating the cell turning off operation for one or more serving cells. In some embodiments, N bits are 2 bits. One of the 2 bits is for indicating cell turning on or indicate that the cell enters the network energy-saving mode. The other one of the 2 bits is for indicating cell turning off.

In a fourth sub-embodiment, one or more information blocks in the DCI format 2_9 are for indicating cell turning off operation information of one or more cells. In some embodiments, the UE determines, based on the high-layer parameters, a starting position of an information block corresponding to indication information in the DCI format for one serving cell. The one serving cell includes a serving cell with a specific cell ID, a secondary cell (SCell) or a primary cell (PCell) configured for the UE, or an SCell with a specific SCell group ID. In some embodiments, the information block indicates one bitmap, where the bitmap includes N bits of information. In some embodiments, each bit in the bitmap correspondingly indicates cell turning off operation information for one or more cells of one UE.

In a fifth sub-embodiment, one or more information blocks in the DCI format 2_9 are for indicating cell turning off operation information of one or more UEs. In some embodiments, the UE determines, based on the high-layer parameters, a starting position of an information block corresponding to indication information in the DCI format for one serving cell. The one serving cell includes a serving cell with a specific cell ID, a secondary cell (SCell) or a primary cell (PCell) configured for the UE, or an SCell with a specific SCell group ID. In some embodiments, the information block indicates one bitmap, where the bitmap includes N bits of information. In some embodiments, each bit in the bitmap correspondingly indicates cell turning off operation information for one or more cells of one UE.

In a sixth sub-embodiment, one or more information blocks in the DCI format 2_9 are for indicating cell turning off and/or turning on operation information for one or more cells, and/or activation or deactivation information for cell DTX/DRX configurations. Each information block includes 1 bit for indicating the cell turning off operation, 1 bit for indicating an activation or deactivation operation of the cell DTX configuration, and 1 bit for indicating an activation or deactivation operation of the cell DRX configuration. An indication domain for the cell turning off operation is located before or after indication fields for activation/deactivation of the cell DTX/DRX configurations. In some embodiments, the same information block indicates the activation or deactivation operation of the cell DTX/DRX configuration and the cell turning off operation for the same serving cell of one UE. In some embodiments, the same information block indicates the activation or deactivation operation of the cell DTX/DRX configuration for a first serving cell and the cell turning off operation of a second serving cell of one UE, where the first serving cell and the second serving cell are configured with different cell IDs. In some embodiments, if the high-layer parameters configure the indication of the cell turning off operation information for one serving cell by the DCI format 2_9 in one information block, the indication domain for the cell turning off operation is 1 bit; otherwise, it is 0 bit.

In a seventh sub-embodiment, one information block in the DCI format 2_9 is for indicating cell turning off operation information of one or more cells. The one information block includes 1 bit of information. The 1 bit is for indicating the cell turning off operation. In some embodiments, if the high-layer parameters configure the indication of the cell turning off operation information for one serving cell by the DCI format 2_9 in one information block, the indication domain for the cell turning off operation is 1 bit; otherwise, it is 0 bit.

In an eighth sub-embodiment, one information block in the DCI format 2_9 is for indicating cell turning off operation information of one or more cells. The one information block includes 1 bit of information. The 1 bit is for indicating the cell turning off operation. In some embodiments, if the high-layer parameters configure the indication of the cell turning off operation information for one serving cell by the DCI format 2_9 in one information block, the indication domain for the cell turning off operation is 1 bit; otherwise, it is 0 bit. In some embodiments, the cell refers to at least one of a PCell, an SpCell, or a PSCell of the UE.

In some embodiments, the one or more cells include a cell supporting the network energy-saving mode, and/or a primary cell, and/or a secondary cell, and/or a cell with a specific cell ID, and/or a plurality of cells with a specific cell group ID. In some embodiments, N is equal to the number of cells configured for the UE that support the network energy-saving mode, and/or the number of primary cells, and/or the number of cells, and/or the number of secondary cell groups, and/or the number of secondary cell groups plus 1, and/or the sum of the number of secondary cells and primary cells, and/or the sum of the number of secondary cell groups and primary cells, and/or the number of secondary cells. In some embodiments, the primary cell is a PCell and/or a special cell (SpCell ) and/or a primary secondary cell (PSCell).

Optionally, the cell ID is configured by a high-layer parameter servingCellId.

Optionally, relevant configuration information indicating the cell turning off operation for one or more serving cells or for one or more UEs via the DCI format 2_9 is configured by the higher-layer parameter CHO-DCI-Config.

Optionally, a starting position of indication information corresponding to a cell turning off operation indication for one serving cell or for one UE in the DCI format 2_9 is configured by the higher-layer parameter PositionInDCI-CHO.

In some embodiments, an information block corresponding to the cell turning off operation for one serving cell or for one UE in the DCI format 2_9 is located either before or after an information block (if any) corresponding to the activation or deactivation operation for the cell DTX and/or cell DRX configuration for the serving cell.

In some embodiments, an information block corresponding to the cell turning off operation for one or more serving cells or for one or more UEs in the DCI format 2_9 is located either before or after all information blocks (if any) corresponding to the activation or deactivation operation for the cell DTX and/or cell DRX configuration.

In an embodiment, FIG. 25 is a structural block diagram of a first communication device according to an embodiment of the present application. As shown in FIG. 25, the first communication device in this embodiment includes: a communication module 310.

The communication module 310 is configured to receive a low power signal transmitted by a second communication device, where the low power signal is obtained by: the second communication device generating a corresponding sequence based on bit information and performing resource mapping on the sequence.

In an embodiment, the sequence includes at least one of the following:
one or more sequence types;
one or more candidate sequence sets;
a sequence generated by one or more sequence initial values; or
a sequence generated by one or more sequence generation formulas.
In an embodiment, the sequence is generated based on at least one of the following:
a corresponding information bit;
a corresponding information type;
a time-domain position; or
a frequency-domain position.

In an embodiment, the generating a corresponding sequence based on bit information includes one of the following:
generating a corresponding sequence based on a corresponding information bit; or
selecting a corresponding sequence based on a corresponding information bit, where the information bit includes bit 0 and bit 1.

In an embodiment, the generating a corresponding sequence based on bit information includes one of the following:
generating a corresponding sequence based on a corresponding information type; or
selecting a corresponding sequence based on a corresponding information type.

The information type includes at least one of the following: system message change information; CMAS/ETWS information; low power wake up fallback indication information; low power wake up deactivation information; cell-level wake up information; group wake up information; UE-specific wake up information; or information related to a low power synchronization signal.

In an embodiment, the performing resource mapping on the sequence includes: carrying different sequences at first positions of first symbols corresponding to different codewords.

In an embodiment, a generation manner of the codeword includes one of the following:
Manchester encoding;
cyclic redundancy check (CRC) calculation;
pulse interval encoding (PIE);
RM coding; or
bi-phase space coding (FM0).

In an embodiment, the performing resource mapping on the sequence includes one of the following:
sequences at different frequency-domain positions of the first position being different; or
sequences at first positions of different frequency-domain positions being different.

In an embodiment, the frequency-domain position includes at least one of the following: a starting frequency-domain position of a first position of a first symbol; a resource block (RB) starting position of the first position of the first symbol; the number of RBs allocated to the first position of the first symbol; an RB end position of the first position of the first symbol; or the number of available resource elements (REs) at the first position of the first symbol.

In an embodiment, the performing resource mapping on the sequence includes one of the following:
sequences carried at different time-domain positions of the first position being different; or
sequences carried at first positions of different time-domain positions being different.

In an embodiment, the time-domain position includes at least one of the following: a starting time-domain position of a first position of a first symbol; a starting OFDM symbol or slot position of the first position of the first symbol; a time-domain end position of the first position of the first symbol; a starting sampling point position of the first position of the first symbol; or a sampling point end position of the first position of the first symbol.

In an embodiment, the performing resource mapping on the sequence includes one of the following:
sequences corresponding to different beam directions being the same; or
sequences carried at the first position corresponding to different beam directions.

The beam directions include: a synchronization signal and physical downlink broadcast channel block (SSB) index; a quasi-co-location (QCL) indication; a channel state information reference signal (CSI-RS) index; a CSI-RS resource index; and a TCI state indication.

In an embodiment, the signal includes a preamble portion and an information portion, and sequences transmitted corresponding to the preamble portion and the information portion are different; and performing resource mapping on the preamble portion includes carrying sequences on time-frequency resources before the first one of first symbols or before the first symbol.

In an embodiment, the time-frequency resources before the first symbol include at least one of the following: a slot before the first symbol; an OFDM symbol before the first symbol; adjacent frequency-domain resources within the same frequency band as the frequency-domain resources occupied by the first symbol; or frequency-domain resources in an adjacent frequency band of the frequency-domain resources occupied by the first symbol.

In an embodiment, the performing resource mapping on the sequence includes one of the following:
sequences corresponding to first positions for transmitting different first information being different; or
sequences carried on first symbols for transmitting different first information being different.

In an embodiment, the first information includes at least one of the following: system message change information; CMAS/ETWS information; low power wake up fallback indication information; low power wake up deactivation information; cell-level wake up information; group wake up information; UE-specific wake up information; or information related to a low power synchronization signal.

In an embodiment, the first symbol carrying the sequence is for indicating first information or group information; the sequence is for indicating the first information, the group information, or subgroup information corresponding to the group information, where the time-domain or frequency-domain resources at the first position within the first symbol are for carrying sequences.

In an embodiment, in a case where the time-domain or frequency-domain resources at the first position within the first symbol are for carrying sequences, a candidate sequence pool is determined according to first configuration information.

In an embodiment, transmission resources for carrying the sequences or the information indicated by the sequences are determined by at least one of the following parameters:
a modulation rate or coding rate of a first type of indication information;
a number of first positions, a maximum number of first positions, or a minimum number of first positions included in a first symbol corresponding to the first type of indication information;
a number of first positions corresponding to a specific codeword;
a number of specific codewords;
a number of codewords corresponding to the first type of indication information;
a number of codewords corresponding to a CRC bit corresponding to the first type of indication information;
a length of the first position within the first symbol, a number of occupied subcarriers, or a number of REs;
a number of bits of the first type of indication information;
a number of CRC bits corresponding to the first type of indication information;
a number of bits of the information indicated by the sequences;
a number of repeated transmissions of the information indicated by the sequences;
a number of frequency hopping of the information indicated by the sequences;
a length of the sequences;
a mapping method of sequences; or
a number of sequences usable for each resource, or a number of information bits can be carried by each resource.

In an embodiment, sequences carried at a plurality of first positions of the first symbol are the same; or each of the different sequences carried by the first symbol is repeatedly or frequency-hopping transmitted over a plurality of consecutive first positions of a first symbol.

In an embodiment, the first symbol includes at least one of an OOK symbol, an FSK symbol, or an OFDM symbol.

The first communication device provided in this embodiment is configured for implementing the signal transmission method applied to the first communication device according to the embodiment shown in FIG. 4. An implementation principle and technical effects of the first communication device provided in this embodiment are similar, which are not detailed herein.

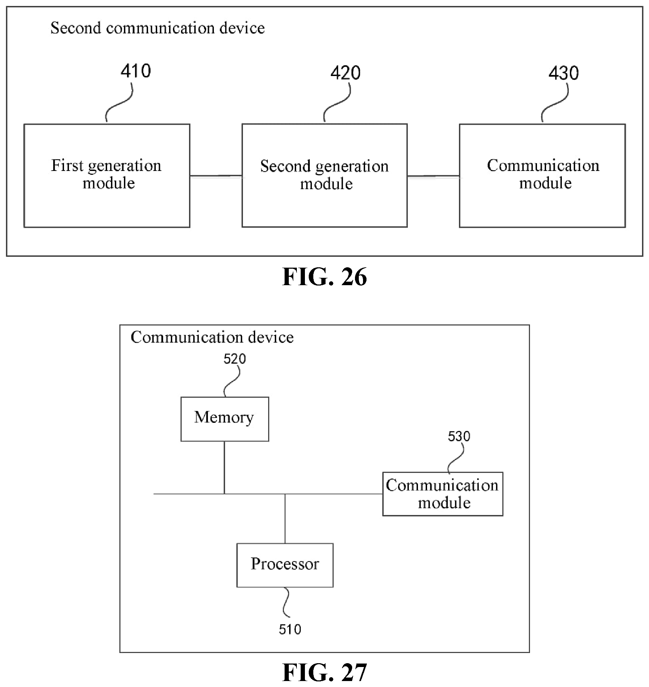

In an embodiment, FIG. 26 is a structural block diagram of a second communication device according to an embodiment of the present application. As shown in FIG. 26, the second communication device in this embodiment includes: a first generation module 410, a second generation module 420, and a communication module 430.

The first generation module 410 is configured to generate a corresponding sequence based on bit information;
the second generation module 420 is configured to perform resource mapping on the sequence to generate a corresponding low power signal; and
the communication module 430 is configured to transmit the low power signal to a first communication device.

In an embodiment, the sequence includes at least one of the following:
one or more sequence types;
one or more candidate sequence sets;
a sequence generated by one or more sequence initial values; or
a sequence generated by one or more sequence generation formulas.

In an embodiment, the sequence is generated based on at least one of the following:
a corresponding information bit;
a corresponding information type;
a time-domain position; or
a frequency-domain position.

In an embodiment, the generating a corresponding sequence based on bit information includes one of the following:
generating a corresponding sequence based on a corresponding information bit; or
selecting a corresponding sequence based on a corresponding information bit, where the information bit includes bit 0 and bit 1.

In an embodiment, the generating a corresponding sequence based on bit information includes one of the following:
generating a corresponding sequence based on a corresponding information type; or
selecting a corresponding sequence based on a corresponding information type.

The information type includes at least one of the following: system message change information; CMAS/ETWS information; low power wake up fallback indication information; low power wake up deactivation information; cell-level wake up information; group wake up information; UE-specific wake up information; or information related to a low power synchronization signal.

In an embodiment, the performing resource mapping on the sequence includes: carrying different sequences at first positions of first symbols corresponding to different codewords.

In an embodiment, a generation manner of the codeword includes one of the following:
Manchester encoding;
cyclic redundancy check (CRC) calculation;
pulse interval encoding (PIE);
RM coding; or
bi-phase space coding (FM0).

In an embodiment, the performing resource mapping on the sequence includes one of the following:
sequences carried at different frequency-domain positions of a first position being different; or
sequences carried at first positions of different frequency-domain positions being different.

In an embodiment, the frequency-domain position includes at least one of the following: a starting frequency-domain position of a first position of a first symbol; a resource block (RB) starting position of the first position of the first symbol; the number of RBs allocated to the first position of the first symbol; an RB end position of the first position of the first symbol; or the number of available resource elements (REs) at the first position of the first symbol.

In an embodiment, the performing resource mapping on the sequence includes one of the following:
sequences carried at different time-domain positions of a first position being different; or
sequences carried at first positions of different time-domain positions being different.

In an embodiment, the time-domain position includes at least one of the following: a starting time-domain position of a first position of a first symbol; a starting OFDM symbol or slot position of the first position of the first symbol; a time-domain end position of the first position of the first symbol; a starting sampling point position of the first position of the first symbol; or a sampling point end position of the first position of the first symbol.

In an embodiment, the performing resource mapping on the sequence includes one of the following:
sequences corresponding to different beam directions being the same; or
sequences carried at a first position corresponding to different beam directions,
where the different beam directions include: different synchronization signal and physical downlink broadcast channel block (SSB) indices, or different quasi co-location (QCL) indications, and transmission configuration indication (TCI) state indications.

In an embodiment, the signal includes a preamble portion and an information portion, and sequences transmitted corresponding to the preamble portion and the information portion are different; and performing resource mapping on the preamble portion includes carrying sequences on time-frequency resources before the first one of first symbols or before the first symbol.

In an embodiment, the time-frequency resources before the first symbol include at least one of the following: a slot before the first symbol; an OFDM symbol before the first symbol; adjacent frequency-domain resources within the same frequency band as the frequency-domain resources occupied by the first symbol; or frequency-domain resources in an adjacent frequency band of the frequency-domain resources occupied by the first symbol.

In an embodiment, the performing resource mapping on the sequence includes one of the following:
sequences corresponding to first positions for transmitting different first information being different; or
sequences carried on first symbols for transmitting different first information being different.

In an embodiment, the first information includes at least one of the following: system message change information; CMAS/ETWS information; low power wake up fallback indication information; low power wake up deactivation information; cell-level wake up information; group wake up information; UE-specific wake up information; or information related to a low power synchronization signal.

In an embodiment, the first symbol carrying the sequence is for indicating first information or group information; the sequence is for indicating the first information, the group information, or subgroup information corresponding to the group information, where the time-domain or frequency-domain resources at the first position within the first symbol are for carrying sequences.

In an embodiment, in a case where the time-domain or frequency-domain resources at the first position within the first symbol are for carrying sequences, a candidate sequence pool is determined according to first configuration information.

In an embodiment, transmission resources for carrying the sequences or the information indicated by the sequences are determined by at least one of the following parameters:
a modulation rate or coding rate of a first type of indication information;
a number of first positions, a maximum number of first positions, or a minimum number of first positions included in a first symbol corresponding to the first type of indication information;
a number of first positions corresponding to a specific codeword;
a number of specific codewords;
a number of codewords corresponding to the first type of indication information;
a number of codewords corresponding to a CRC bit corresponding to the first type of indication information;
a length of the first position within the first symbol, a number of occupied subcarriers, or the number of REs;
a number of bits of the first type of indication information;
a number of CRC bits corresponding to the first type of indication information;
a number of bits of the information indicated by the sequences;
a number of repeated transmissions of the information indicated by the sequences;
a number of frequency hopping of the information indicated by the sequences;
a length of the sequences;
a mapping method of sequences; or
a number of sequences usable for each resource, or a number of information bits can be carried by each resource.

In an embodiment, sequences carried at a plurality of first positions of the first symbol are the same; or each of the different sequences carried by the first symbol is repeatedly or frequency-hopping transmitted over a plurality of consecutive first positions of a first symbol.

In an embodiment, the first symbol includes at least one of an OOK symbol, an FSK symbol, or an OFDM symbol.

In an embodiment, the second communication device further includes: a configurer, configured to configure the number of bits indicated by a sequence carried on one OFDM symbol or one first position, so that the first communication device detects a low power signal from a sequence in a corresponding sequence pool based on the number of bits.

In an embodiment, the communication module in the second communication device is further configured to receive a first feature related to the low power signal transmitted by the first communication device, where the first feature is a feature that the first communication device needs to support.

In an embodiment, the first feature includes at least one of the following:
support for detecting or receiving sequences or sequences carried on a first position of a first symbol;
support for a maximum number of bits carried by sequences;
support for a maximum number of bits carried by the first symbol;
support for a maximum number of sequences detectable within a specific time or specific resources;
support for the number of candidate sequence pools;
support for a maximum number of candidate sequences for transmission; or
support for a capability of serving cell measurement relaxation, where measurements include an SSB-based measurement, a CSI-RS-based measurement, a TRS-based measurement, a PRS-based measurement, a PTRS-based measurement, or a CRS-based measurement.

The first communication device provided in this embodiment is configured for implementing the signal transmission method applied to the second communication device according to the embodiment shown in FIG. 5. An implementation principle and technical effects of the first communication device provided in this embodiment are similar, which are not detailed herein.

In an embodiment, FIG. 27 is a schematic structural diagram of a communication device according to an embodiment of the present application. As shown in FIG. 27, the device provided in the present application includes a processor 510, a memory 520, and a communication module 530. One or more processors 510 exist in the device, with one processor 510 in FIG. 27 as an example. One or more memories 520 exist in the device, with one memory 520 in FIG. 27 as an example. The processor 510, the memory 520, and the communication module 530 in the device may be connected through a bus or other methods, and bus connection is taken as an example in FIG. 27. In this embodiment, the device may be a first communication device.

The memory 520, as a computer-readable storage medium, may be configured to store a software program, a computer-executable program, and a module, such as a program instruction/module (e.g., a communication module 310 in the first communication device) corresponding to the device according to any embodiment of the present application. The memory 520 may include a program storage area and a data storage area, where the program storage area may store an operating system and an application program needed by at least one function; and the data storage area may store data, etc. created according to device usage. In addition, the memory 520 may include a high-speed random access memory and may further include a non-volatile memory, such as at least one disk storage device, flash memory, or other non-transitory solid-state storage devices. In some examples, the memory 520 may further include memories which are remotely disposed relative to the processor 510, and these remote memories may be connected to the device through a network. Examples of the above-mentioned network include, but are not limited to, an Internet, an intranet, a local area network, a mobile communication network, and a combination thereof.

In a case where the communication device is the first communication device, the device provided above may be configured to perform the signal transmission method applied to the first communication device according to any of the above-mentioned embodiments, and have corresponding functions and effects.

In a case where the communication device is a second communication device, the device provided above may be configured to perform the signal transmission method applied to the second communication device according to any of the above-mentioned embodiments, and have corresponding functions and effects.

An embodiment of the present application also provides a storage medium containing computer-executable instructions. The computer-executable instructions, when executed by a computer processor, are configured to perform the signal transmission method applied to the first communication device. The method includes: receiving a low power signal transmitted by a second communication device, where the low power signal is obtained by: the second communication device generating a corresponding sequence based on bit information and performing resource mapping on the sequence.

An embodiment of the present application also provides a storage medium containing computer-executable instructions. The computer-executable instructions, when executed by a computer processor, are configured to perform the signal transmission method applied to the second communication device. The method includes: generating a corresponding sequence based on bit information; performing resource mapping on the sequence to generate a corresponding low power signal; and transmitting the low power signal to the first communication device.

Those skilled in the art should understand that the term "user equipment" covers any suitable type of wireless user device, such as mobile phones, portable data processing apparatuses, portable web browsers, or in-vehicle mobile stations.

Typically, various embodiments of the present application may be implemented in hardware or dedicated circuits, software, logic, or any combination thereof. For example, some aspects may be implemented in hardware, while other aspects may be implemented in firmware or software executable by a controller, a microprocessor, or another computing apparatus, although the present application is not limited to this.

This embodiment of the present application may be implemented by executing computer program instructions through a data processor of a mobile apparatus, such as in a processor entity, or by hardware, or by a combination of software and hardware. The computer program instructions may be assembly instructions, instruction set architecture (ISA) instructions, machine instructions, machine-dependent instructions, microcode, firmware instructions, state setting data, or source code or object code written in any combination of one or more programming languages.

A block diagram of any logical flow in the accompanying drawings of the present application may represent program operations, or may represent interconnected logical circuits, modules, and functions, or may represent a combination of the program operations, the logical circuits, the modules, and the functions. The computer program may be stored in the memory. The memory may be of any type suitable for a local technical environment and may be implemented using any suitable data storage technology, for example, including but not limited to, a read-only memory (ROM), a random access memory (RAM), an optical memory apparatus and system(a digital video disc (DVD), or a compact disk (CD)), etc. The computer-readable medium may include a non-transitory storage medium. The data processor may be of any type suitable for the local technical environment, for example, including but not limited to, a general-purpose computer, a special-purpose computer, a microprocessor, digital signal processing (DSP), an application specific integrated circuit (ASIC), a field-programmable gate array (FPGA), and a processor based on a multi-core processor architecture.

The above-mentioned embodiments are merely preferred embodiments of the present application, and are not intended to limit the present application. For those skilled in the art, the present application may have various modifications and changes. Any modification, equivalent replacement, improvement, etc. made within the spirit and the principle of the present application shall fall within the scope of protection of the present application.

## Claims

1. A method for signal transmission, applied to a first communication device, the method comprising:
receiving a low power signal transmitted by a second communication device; wherein the low power signal is obtained by: a second communication device generating a corresponding sequence based on bit information and performing resource mapping on the sequence.

2. The method of claim 1, wherein the sequence comprises at least one of the following:
one or more sequence types;
one or more candidate sequence sets;
a sequence generated by one or more sequence initial values; or
a sequence generated by one or more sequence generation formulas.

3. The method of claim 1, wherein the sequence is generated based on at least one of the following:
a corresponding information bit;
a corresponding information type;
a time-domain position; or
a frequency-domain position.

4. The method of claim 3, wherein the generating a corresponding sequence based on bit information comprises one of the following:
generating a corresponding sequence based on a corresponding information bit; or
selecting a corresponding sequence based on a corresponding information bit, wherein the information bit comprises bit 0 and bit 1.

5. The method of claim 3, wherein the generating a corresponding sequence based on bit information comprises one of the following:
generating a corresponding sequence based on a corresponding information type; or
selecting a corresponding sequence based on a corresponding information type.

6. The method of claim 1, wherein the performing resource mapping on the sequence comprises: carrying different sequences at first positions of first symbols corresponding to different codewords.

7. The method of claim 6, wherein a generation manner of the codeword comprises one of the following:
Manchester encoding;
cyclic redundancy check (CRC) calculation;
pulse interval encoding (PIE);
RM coding; or
bi-phase space coding (FM0).

8. The method of claim 1, wherein the performing resource mapping on the sequence comprises one of the following:
sequences carried at different frequency-domain positions of a first position being different; or
sequences carried at first positions of different frequency-domain positions being different.

9. The method of claim 3 or 8, wherein the frequency-domain position comprises at least one of the following: a starting frequency-domain position of a first position of a first symbol; a resource block (RB) starting position of a first position of a first symbol; the number of RBs allocated to a first position of a first symbol; an RB end position of a first position of a first symbol; or the number of available resource elements (REs) at a first position of a first symbol.

10. The method of claim 1, wherein the performing resource mapping on the sequence comprises one of the following:
sequences carried at different time-domain positions of a first position being different; or
sequences carried at first positions of different time-domain positions being different.

11. The method of claim 3 or 10, wherein the time-domain position comprises at least one of the following: a starting time-domain position of a first position of a first symbol; a starting OFDM symbol or slot position of a first position of a first symbol; a time-domain end position of a first position of a first symbol; a starting sampling point position of a first position of a first symbol; or a sampling point end position of a first position of a first symbol.

12. The method of claim 1, wherein the performing resource mapping on the sequence comprises one of the following:
sequences corresponding to different beam directions being the same; or
sequences carried at a first position corresponding to different beam directions,
wherein the beam directions comprise: a synchronization signal and physical downlink broadcast channel block (SSB) index; a quasi co-location (QCL) indication; a channel state information reference signal (CSI-RS) index; a CSI-RS resource index; and a TCI state indication.

13. The method of claim 1, wherein the signal comprises a preamble portion and an information portion, and sequences transmitted corresponding to the preamble portion and the information portion are different; and performing resource mapping on the preamble portion comprises: carrying sequences on time-frequency resources before the first one of first symbols or before a first symbol.

14. The method of claim 13, wherein time-frequency resources before the first symbol comprise at least one of the following: a slot before a first symbol; an OFDM symbol before a first symbol; adjacent frequency-domain resources within the same frequency band as the frequency-domain resources occupied by a first symbol; or frequency-domain resources in an adjacent frequency band of the frequency-domain resources occupied by a first symbol.

15. The method of claim 1, wherein the performing resource mapping on the sequence comprises one of the following:
sequences corresponding to first positions for transmitting different first information being different; or
sequences carried on first symbols for transmitting different first information being different.

16. The method of claim 15, wherein the first information comprises at least one of the following: system message change information; CMAS/ETWS information; low power wake up fallback indication information; low power wake up deactivation information; cell-level wake up information; group wake up information; UE-specific wake up information; or information related to a low power synchronization signal.

17. The method of claim 1, wherein a first symbol carrying the sequence is for indicating first information or group information; the sequence is for indicating the first information, the group information, or subgroup information corresponding to the group information, wherein time-domain or frequency-domain resources at a first position within a first symbol are for carrying sequences.

18. The method of claim 17, wherein in a case where the time-domain or frequency-domain resources at a first position within a first symbol are for carrying sequences, determining a candidate sequence pool based on first configuration information.

19. The method of claim 17, wherein transmission resources for carrying the sequences or information indicated by the sequences are determined by at least one of the following parameters:
a modulation rate or a coding rate of a first type of indication information;
a number of first positions, a maximum number of first positions, or a minimum number of first positions included in a first symbol to which a first type of indication information corresponds;
a number of first positions to which a specific codeword corresponds;
a number of specific codewords;
a number of codewords to which a first type of indication information corresponds;
a number of codewords corresponding to a CRC bit to which a first type of indication information corresponds;
a length of the first position of the first symbol, a number of occupied subcarriers, or a number of REs;
a number of bits of a first type of indication information;
a number of CRC bits to which the first type of indication information corresponds;
a number of bits of information indicated by sequences;
a number of repeated transmissions of information indicated by sequences;
a number of frequency hopping of information indicated by sequences;
a length of sequences;
a mapping method of sequences; or
a number of sequences usable for each resource, or a number of information bits can be carried by each resource.

20. The method of claim 1, wherein sequences carried at a plurality of first positions of a first symbol are the same; or each of different sequences carried by the first symbol is repeated or frequency-hopping transmitted over a plurality of consecutive first positions of a first symbol.

21. The method of any of claims 6, 9, 11, 13, 14, 15, or 17 to 20, wherein a first symbol comprises at least one of an OOK symbol, an FSK symbol, or an OFDM symbol.

22. A method for signal transmission, applied to a second communication device, the method comprising:
generating a corresponding sequence based on bit information;
performing resource mapping on the sequence to generate a corresponding low power signal; and
transmitting the low power signal to a first communication device.

23. The method of claim 22, wherein the method further comprises:
configuring a number of bits indicated by a sequence carried on one OFDM symbol or one first position, so that the first communication device detects a low power signal from a sequence in a corresponding sequence pool based on the number of bits.

24. The method of claim 22, wherein the method further comprises:
receiving a first feature related to a low power signal transmitted by the first communication device, wherein the first feature is a feature that the first communication device needs to support.

25. The method of claim 24, wherein the first feature comprises at least one of the following:
support for detecting or receiving sequences or sequences carried on a first position of a first symbol;
support for a maximum number of bits carried by sequences;
support for a maximum number of bits carried by a first symbol;
support for a maximum number of sequences detected within a specific time or specific resources;
support for a number of candidate sequence pools;
support for a maximum number of candidate sequences for transmission; or
support for a capability of serving cell measurement relaxation, wherein measurements comprise an SSB-based measurement, a CSI-RS-based measurement, a TRS-based measurement, a PRS-based measurement, a PTRS-based measurement, or a CRS-based measurement.

26. A first communication device, comprising:
a communication module, configured to receive a low power signal transmitted by a second communication device, wherein the low power signal is obtained by: the second communication device generating a corresponding sequence based on bit information and performing resource mapping on the sequence.

27. A second communication device, comprising:
a first generation module, configured to generate a corresponding sequence based on bit information;
a second generation module, configured to perform resource mapping on the sequence to generate a corresponding low power signal; and
a communication module, configured to transmit the low power signal to a first communication device.

28. A communication device, comprising a memory and one or more processors,
the memory being configured to store one or more programs; and
the one or more programs, when executed by the one or more processors, causing the one or more processors to implement the method of any of claims 1 to 21 or 22 to 25.

29. A storage medium, having a computer program stored therein, the computer program, when executed by a processor, causing the method of any of claims 1 to 21 or 22 to 25 to be implemented.
